(19) Europäisches Patentamt / European Patent Office / Office européen des brevets

(11) **EP 4 432 181 A1**

(12) **EUROPEAN PATENT APPLICATION**

(43) Date of publication:
**18.09.2024  Bulletin 2024/38**

(21) Application number: **24160592.2**

(22) Date of filing: **29.02.2024**

(51) International Patent Classification (IPC):
**G06Q 10/0631** (2023.01)      **B60S 5/00** (2006.01)
**G06Q 10/0637** (2023.01)      **G06Q 10/20** (2023.01)
**G06Q 50/40** (2024.01)

(52) Cooperative Patent Classification (CPC):
**G06Q 10/20; G06Q 10/06313; G06Q 10/06375;
G06Q 50/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **13.03.2023  US 202318182789**

(71) Applicant: **Solera Holdings, LLC
Westlake, TX 76262 (US)**

(72) Inventor: **Portillo, Álvaro Rivero
Seville (ES)**

(74) Representative: **Barker Brettell LLP
100 Hagley Road
Edgbaston
Birmingham B16 8QQ (GB)**

(54)    **IDENTIFICATION AND USE OF GREENHOUSE GAS EMISSION ESTIMATES ASSOCIATED WITH VEHICLE REPAIR FACILITIES**

(57)    A method includes obtaining information associated with one or more vehicle repairs by one or more vehicle repair facilities (902). The method also includes identifying an estimate of direct emissions of greenhouse gases, an estimate of indirect energy emissions of greenhouse gases (904), and an estimate of other indirect emissions of greenhouse gases associated with each vehicle repair (906). In addition, the method includes generating a total estimate of greenhouse gas emissions associated with each vehicle repair based on the estimate of direct emissions, estimate of indirect energy emissions, and estimate of other indirect emissions associated with each vehicle repair (908). The information may be associated with multiple vehicle repairs by multiple vehicle repair facilities. The method may further include adjusting or controlling how at least some vehicle repairs are performed by at least some vehicle repair facilities in order to reduce total emissions of greenhouse gases associated with the multiple vehicle repairs (916).

FIG. 9

EP 4 432 181 A1

**Description**

TECHNICAL FIELD

This disclosure generally relates to environmental, social, and governance (ESG) systems and processes. More specifically, this disclosure relates to the identification and use of greenhouse gas emission estimates associated with vehicle repair facilities.

BACKGROUND

Global climate change is currently one of the most important issues that humanity is facing. The emission of carbon dioxide and other greenhouse gases due to industrial and personal activities is one of the primary causes of global climate change. More and more organizations (including businesses and local, state, and national governments) have begun implementing processes for estimating greenhouse gas emissions. Among other things, the estimation of greenhouse gas emissions allows these organizations to begin taking steps to reduce their overall greenhouse gas emissions. Many organizations have even pledged to become "carbon neutral" within certain periods of time, where carbon neutrality is defined as having "net-zero" carbon dioxide emissions (meaning certain emissions of carbon dioxide are balanced or offset by removal of carbon dioxide from the environment).

SUMMARY

This disclosure relates to the identification and use of greenhouse gas emission estimates associated with vehicle repair facilities.

In a first embodiment, a method includes obtaining information associated with one or more vehicle repairs by one or more vehicle repair facilities. The method also includes identifying an estimate of direct emissions of greenhouse gases associated with each of the one or more vehicle repairs, identifying an estimate of indirect energy emissions of greenhouse gases associated with each of the one or more vehicle repairs, and identifying an estimate of other indirect emissions of greenhouse gases associated with each of the one or more vehicle repairs. The method further includes generating a total estimate of greenhouse gas emissions associated with each of the one or more vehicle repairs based on the estimate of direct emissions, the estimate of indirect energy emissions, and the estimate of other indirect emissions associated with each of the one or more vehicle repairs.

In a second embodiment, an apparatus includes at least one processing device configured to obtain information associated with one or more vehicle repairs by one or more vehicle repair facilities. The at least one processing device is also configured to identify an estimate of direct emissions of greenhouse gases associated with each of the one or more vehicle repairs, identify an estimate of indirect energy emissions of greenhouse gases associated with each of the one or more vehicle repairs, and identify an estimate of other indirect emissions of greenhouse gases associated with each of the one or more vehicle repairs. The at least one processing device is further configured to generate a total estimate of greenhouse gas emissions associated with each of the one or more vehicle repairs based on the estimate of direct emissions, the estimate of indirect energy emissions, and the estimate of other indirect emissions associated with each of the one or more vehicle repairs.

In a third embodiment, a non-transitory machine-readable medium contains instructions that when executed cause at least one processor to obtain information associated with one or more vehicle repairs by one or more vehicle repair facilities. The non-transitory machine-readable medium also contains instructions that when executed cause the at least one processor to identify an estimate of direct emissions of greenhouse gases associated with each of the one or more vehicle repairs, identify an estimate of indirect energy emissions of greenhouse gases associated with each of the one or more vehicle repairs, and identify an estimate of other indirect emissions of greenhouse gases associated with each of the one or more vehicle repairs. The non-transitory machine-readable medium further contains instructions that when executed cause the at least one processor to generate a total estimate of greenhouse gas emissions associated with each of the one or more vehicle repairs based on the estimate of direct emissions, the estimate of indirect energy emissions, and the estimate of other indirect emissions associated with each of the one or more vehicle repairs.

Other technical features may be readily apparent to one skilled in the art from the following figures, descriptions, and claims.

BRIEF DESCRIPTION OF THE DRAWINGS

For a more complete understanding of this disclosure and its advantages, reference is now made to the following description, taken in conjunction with the accompanying drawings, in which like reference numerals represent like parts:

FIGURE 1 illustrates an example system supporting the identification and use of greenhouse gas emission estimates associated with vehicle repair facilities according to this disclosure;

FIGURE 2 illustrates an example device supporting the identification and use of greenhouse gas emission estimates associated with vehicle repair facilities according to this disclosure;

FIGURE 3 illustrates an example classification scheme for different types of greenhouse gas emissions according to this disclosure;

FIGURES 4 through 8 illustrate example graphical user interfaces related to the identification and use of greenhouse gas emission estimates associated with vehicle repair facilities according to this disclosure; and

FIGURE 9 illustrates an example method for identifying and using greenhouse gas emission estimates associated with vehicle repair facilities according to this disclosure.

DETAILED DESCRIPTION

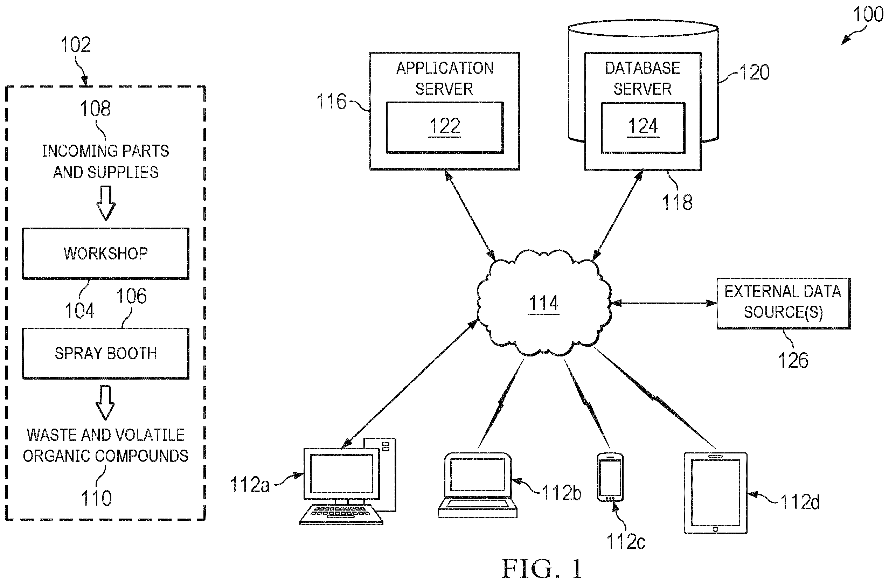

FIGURES 1 through 9, described below, and the various embodiments used to describe the principles of this disclosure are by way of illustration only and should not be construed in any way to limit the scope of this disclosure. Those skilled in the art will understand that the principles of this disclosure may be implemented in any type of suitably arranged device or system.

As noted above, global climate change is currently one of the most important issues that humanity is facing. The emission of carbon dioxide and other greenhouse gases due to industrial and personal activities is one of the primary causes of global climate change. More and more organizations (including businesses and local, state, and national governments) have begun implementing processes for estimating greenhouse gas emissions. Among other things, the estimation of greenhouse gas emissions allows these organizations to begin taking steps to reduce their overall greenhouse gas emissions. Many organizations have even pledged to become "carbon neutral" within certain periods of time, where carbon neutrality is defined as having "net-zero" carbon dioxide emissions (meaning certain emissions of carbon dioxide are balanced or offset by removal of carbon dioxide from the environment).

Unfortunately, it is not a simple task to estimate greenhouse gas emissions, particularly for a business or other organization having a number of people and various equipment (possibly at multiple sites) within the organization. For example, a vehicle repair facility typically includes various equipment used to repair damaged vehicles, including one or more workshops in which vehicles are repaired and one or more spray booths in which repaired vehicles or portions thereof are painted. Even if it is feasible to estimate greenhouse gas emissions generated by the equipment of the vehicle repair facility itself, this offers an incomplete estimate of the vehicle repair facility's total greenhouse gas emissions. Moreover, there have been no available mechanism for estimating greenhouse gas emissions associated with individual vehicle repairs and for collections of vehicle repairs performed by one or more vehicle repair facilities. In addition, the lack of accurate insight in an organization's total greenhouse gas emissions can make it difficult or impossible to make decisions that would actually reduce the organization's total greenhouse gas emissions. For instance, in a vehicle repair facility, personnel often have the option of renewing/repairing damaged vehicle components (which typically involves functions such as machining or painting) or replacing damaged vehicle components (which typically involves functions such obtaining replacement vehicle components from outside sources). The inability to accurately estimate the greenhouse gas emissions associated with different operation types can interfere with or prevent attempts to reduce the greenhouse gas emissions associated with the vehicle repair facility.

This disclosure provides techniques for identifying and using greenhouse gas emission estimates associated with vehicle repair facilities. As described in more detail below, the described techniques allow for a more accurate estimation of the greenhouse gas emissions associated with both (i) operations of a vehicle repair facility itself and (ii) procurement of paints, vehicle components, and other materials used during vehicle repairs. This can be done for a single vehicle repair facility or across multiple vehicle repair facilities, such as across multiple vehicle repair facilities that perform vehicle repairs for a given insurance company. Moreover, the described techniques allow for comparisons to be made of the greenhouse gas emission estimates associated with different operation types, such as for renewing vehicle components and replacing vehicle components. This allows more effective decision-making to occur, such as by allowing the greenhouse gas emissions associated with different potential repair actions to be estimated and considered when selecting among the different operation types. Ideally, this allows an organization to more effectively identify, manage, and reduce its overall greenhouse gas emissions.

FIGURE 1 illustrates an example system 100 supporting the identification and use of greenhouse gas emission estimates associated with vehicle repair facilities according to this disclosure. As shown in FIGURE 1, the system 100 is associated with at least one vehicle repair facility 102. In this example, each vehicle repair facility 102 includes at least one workshop 104 and at least one spray booth 106. Each workshop 104 generally represents a facility or portion thereof in which vehicles can be repaired. For example, each workshop 104 may include one or more vehicle lifts for physically raising and lowering vehicles, handheld or other tools for removing or attaching vehicle components, tools for machining or renewing vehicle components, and tools for performing other functions related to vehicles or vehicle components. Each spray booth 106 generally represents a structure in which at least one vehicle or one or more portions thereof can be painted. For instance, each spray booth 106 can define a controllable environment in which spray painting of the vehicle(s) or the portion(s) of the vehicle(s) may occur. Each spray booth 106 may typically include components for providing air into the spray booth 106, for controlling one or more characteristics inside the spray booth 106 (such as temperature and humidity), and for heating the air inside the spray booth 106 (such as by burning one or more fuels).

In this example, each vehicle repair facility 102 receives various incoming parts and supplies 108 that are used during vehicle repairs. For example, the incoming parts and supplies 108 can include replacement parts for vehicles being repaired, such as replacement panels, bumpers, lights, and other components. The incoming parts and supplies 108 can also include paints that may be used to paint or otherwise finish panels, bumpers, or other parts of the vehicles being repaired. Each vehicle repair facility 102 also typically creates/releases waste and volatile organic compounds 110. The waste can include damaged parts removed from vehicles and materials from parts that are renewed by the vehicle repair facility 102. The volatile organic compounds 110 can include compounds from paints that are released during repairs performed by the vehicle repair facility 102.

Note that there may be a single vehicle repair facility 102 or multiple vehicle repair facilities 102 associated with the system 100. In some cases, for example, the system 100 may be associated with multiple vehicle repair facilities 102, such as all of the vehicle repair facilities 102 that a vehicle insurer has authorized to conduct vehicle repairs for the vehicle insurer's policy holders. Of course, any individual vehicle repair facility 102 or collection of vehicle repair facilities 102 may be associated with the system 100. Also note that each vehicle repair facility 102 may be associated with any suitable number of workshops 104 and any suitable number of spray booths 106. In addition, note that the specific incoming parts and supplies 108 received by each vehicle repair facility 102 and the specific waste and volatile organic compounds 110 produced by each vehicle repair facility 102 can vary depending on the circumstances, such as the specific vehicles repaired by the vehicle repair facility 102 or the specific repairs performed by the vehicle repair facility 102.

In any given vehicle repair facility 102, each spray booth 106 may operate by burning fuel to produce heat within the spray booth 106. As a result, operation of each spray booth 106 typically involves the generation of carbon dioxide or other greenhouse gas emissions. Also, various tools in each workshop 104 and various components of each spray booth 106 may require electricity to operate. Assuming the electricity is generated using fossil fuel, operation of these tools in each workshop 104 and operation of each spray booth 106 can involve the generation of additional carbon dioxide or other greenhouse gas emissions. Further, the various incoming parts and supplies 108 received and used by a vehicle repair facility 102 are typically associated with carbon dioxide or other greenhouse gas emissions, such as greenhouse gas emissions that are produced during the procurement of the raw materials needed to create the incoming parts and supplies 108, the processing operations needed to convert the raw materials into the incoming parts and supplies 108, and transportation of the incoming parts and supplies 108 to the vehicle repair facility 102. In addition, the waste and volatile organic compounds 110 are typically associated with carbon dioxide or other greenhouse gas emissions, such as when the waste needs to be disposed of or the volatile organic compounds themselves represent or form greenhouse gas emissions.

As can be seen here, it may be possible to easily estimate some amounts of greenhouse gas emissions associated with the overall operation of each vehicle repair facility 102, such as the greenhouse gas emissions associated with all electricity usage by each vehicle repair facility 102. However, it is much more difficult to estimate greenhouse gas emissions on a more granular level, such as for each individual vehicle being repaired in a vehicle repair facility 102. Also, some greenhouse gas emissions, such as those associated with the incoming parts and supplies 108 and the waste and volatile organic compounds 110, may be difficult or impossible to easily determine on an individual basis, such as for each individual vehicle being repaired in a vehicle repair facility 102.

In accordance with this disclosure, the system 100 includes various computing, networking, and data processing components that can be used to estimate greenhouse gas emissions associated with one or more vehicle repair facilities 102. As described in more detail below, the system 100 is configured to estimate greenhouse gas emissions for each individual vehicle being repaired, such as for each vehicle repair covered by an insurance claim of a vehicle insurer. This can be done for each vehicle repair facility 102 separately or for multiple vehicle repair facilities 102 collectively, and this can be done for vehicle repair facilities 102 in one or multiple regions (such as different cities, states/provinces, or countries). Not only does this give facility operators, insurers, or other parties access to more accurate information related to greenhouse gas emissions of the vehicle repair facility or facilities 102, this gives facility operators, insurers, or other parties the ability to take into account possible amounts of greenhouse gas emissions when making decisions regarding operation types (like whether to renew or replace damaged vehicle components).

As shown in FIGURE 1, the system 100 includes multiple user devices 112a-112d, at least one network 114, at least one application server 116, and at least one database server 118 associated with at least one database 120. In this example, each user device 112a-112d is coupled to or communicates over the network 114. Communications between each user device 112a-112d and a network 114 may occur in any suitable manner, such as via a wired or wireless connection. Each user device 112a-112d represents any suitable device or system used by at least one user to provide information to the application server 116 or database server 118 or to receive information from the application server 116 or database server 118. Any suitable number(s) and type(s) of user devices 112a-112d may be used in the system 100. In this particular example, the user device 112a represents a desktop computer, the user device 112b represents a laptop computer, the user device 112c represents a smartphone, and the user device 112d represents a tablet computer. However, any other or additional types of user devices may be used in the system 100. Each user device 112a-112d includes any suitable structure configured to transmit and/or receive information.

The network 114 facilitates communication between various components of the system 100. For example, the network 114 may communicate Internet Protocol (IP) packets, frame relay frames, Asynchronous Transfer Mode (ATM) cells, or other suitable information between network addresses. The network 114 may include one or more local area networks (LANs), metropolitan area networks (MANs), wide area networks (WANs), all or a portion of a global network such as the Internet, or any other communication system or systems at one or more locations. The network 114 may also operate according to any appropriate communication protocol or protocols.

The application server 116 is coupled to the network 114 and is coupled to or otherwise communicates with the database server 118. The application server 116 supports the collection and analysis of information related to one or more vehicle repair facilities 102 and vehicle repairs performed by the vehicle repair facility or facilities 102 in order to estimate greenhouse gas emissions associated with the vehicle repair facility or facilities 102. The application server 116 also supports the generation of graphical user interfaces, reports, or other analysis results related to the estimated greenhouse gas emissions associated with the vehicle repair facility or facilities 102, such as for presentation via one or more of the user devices 102a-102d. The application server 116 may further support the ability to make automated decisions or recommend decisions on how vehicle repairs should occur based on the estimated greenhouse gas emissions associated with the vehicle repair facility or facilities 102. For example, at least one application 122 may be configured to retrieve information from the database 120 via the database server 118 for processing and/or provide information to the database 120 via the database server 118 for storage.

The database server 118 operates to store and facilitate retrieval of various information 124 used, generated, or collected by the application server 116, the user devices 112a-112d, or other components of the system 100 in the database 120. For example, the database server 118 may store various information 124 related to greenhouse gas emissions by one or more vehicle repair facilities 102 or information 124 used to generate estimates of greenhouse gas emissions by one or more vehicle repair facilities 102. Note that the database server 118 may also be used within the application server 116 to store information 124, in which case the application server 116 may store the information 124 itself.

In some cases, at least some of the information 124 stored in the database 120 and/or used by the application server 116 may be retrieved from one or more external data sources 126. For example, as described in more detail below, some of the estimates of greenhouse gas emissions by one or more vehicle repair facilities 102 can be based on estimates associated with average amounts of labor during which energy is used in a workshop 104 during a repair, average electrical usage by a spray booth 106, estimated energy usages during different renew and replace operations, or other values or information. At least some of these values or information may be obtained from one or more governmental, private, or other external data source(s) 126.

Although FIGURE 1 illustrates one example of a system 100 supporting the identification and use of greenhouse gas emission estimates associated with vehicle repair facilities, various changes may be made to FIGURE 1. For example, the system 100 may include or be associated with any number of vehicle repair facilities 102, workshops 104, spray booths 106, user devices 112a-112d, networks 114, application servers 116, database servers 118, databases 120, and external data sources 126. Also, these components may be located in any suitable location(s) and might be distributed over a large area. In addition, while FIGURE 1 illustrates one example operational environment in which the identification and use of greenhouse gas emission estimates associated with vehicle repair facilities may be used, this functionality may be used in any other suitable system.

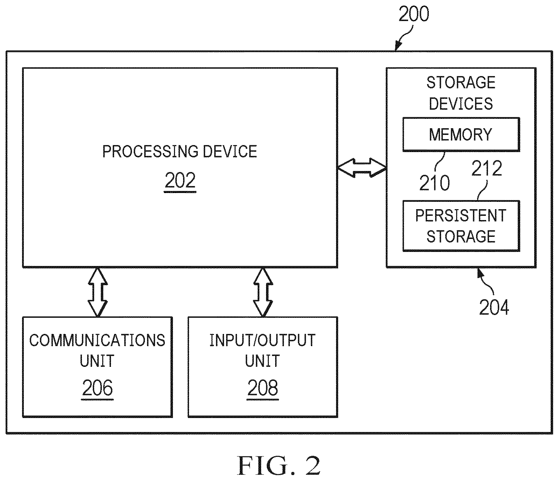

FIGURE 2 illustrates an example device 200 supporting the identification and use of greenhouse gas emission estimates associated with vehicle repair facilities according to this disclosure. One or more instances of the device 200 may, for example, be used to at least partially implement the functionality of the application server 116 of FIGURE 1 or other device(s) used to provide or support the identification and use of greenhouse gas emission estimates associated with vehicle repair facilities. However, the functionality of the application server 116 may be implemented in any other suitable manner, and the identification and use of greenhouse gas emission estimates may be implemented using any suitable device(s) and in any suitable system(s).

As shown in FIGURE 2, the device 200 denotes a computing device or system that includes at least one processing device 202, at least one storage device 204, at least one communications unit 206, and at least one input/output (I/O) unit 208. The processing device 202 may execute instructions that can be loaded into a memory 210. The processing device 202 includes any suitable number(s) and type(s) of processors or other processing devices in any suitable arrangement. Example types of processing devices 202 include one or more microprocessors, microcontrollers, digital signal processors (DSPs), application specific integrated circuits (ASICs), field programmable gate arrays (FPGAs), or discrete circuitry.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random access memory or any other suitable volatile or nonvolatile storage device(s). The persistent storage 212 may contain one or more components or devices supporting longer-term storage of data, such as a read only memory, hard drive, Flash memory, or optical disc.

The communications unit 206 supports communications with other systems or devices. For example, the communications unit 206 can include a network interface card or a wireless transceiver facilitating communications over a wired or wireless network, such as the network 114. The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also send output to a display, printer, or other suitable output device. Note, however, that the I/O unit 208 may be omitted if the device 200 does not require local I/O, such as when the device 200 represents a server or other device that can be accessed remotely.

In some embodiments, the instructions executed by the processing device 202 include instructions that implement the functionality of the at least one application 122 executed by the application server 116. Thus, for example, the instructions when executed by the processing device 202 may cause the processing device 202 to collect and analyze information 124 related to one or more vehicle repair facilities 102 and vehicle repairs performed by the vehicle repair facility or facilities 102 in order to estimate greenhouse gas emissions associated with the repairs performed by the vehicle repair facility or facilities 102. This can be done for each individual vehicle repair, for all repairs by a vehicle repair facility 102, for all repairs by multiple vehicle repair facilities 102, or in any other suitable manner. The instructions when executed by the processing device 202 may also cause the processing device 202 to generate and present graphical user interfaces, reports, or other analysis results related to the estimated greenhouse gas emissions associated with the vehicle repair facility or facilities 102. The instructions when executed by the processing device 202 may further cause the processing device 202 to make automated decisions or recommend decisions on how vehicle repairs should occur based on the estimated greenhouse gas emissions associated with the vehicle repair facility or facilities 102.

Although FIGURE 2 illustrates one example of a device 200 supporting the identification and use of greenhouse gas emission estimates associated with vehicle repair facilities, various changes may be made to FIGURE 2. For example, computing and communication devices and systems come in a wide variety of configurations, and FIGURE 2 does not limit this disclosure to any particular computing or communication device or system.

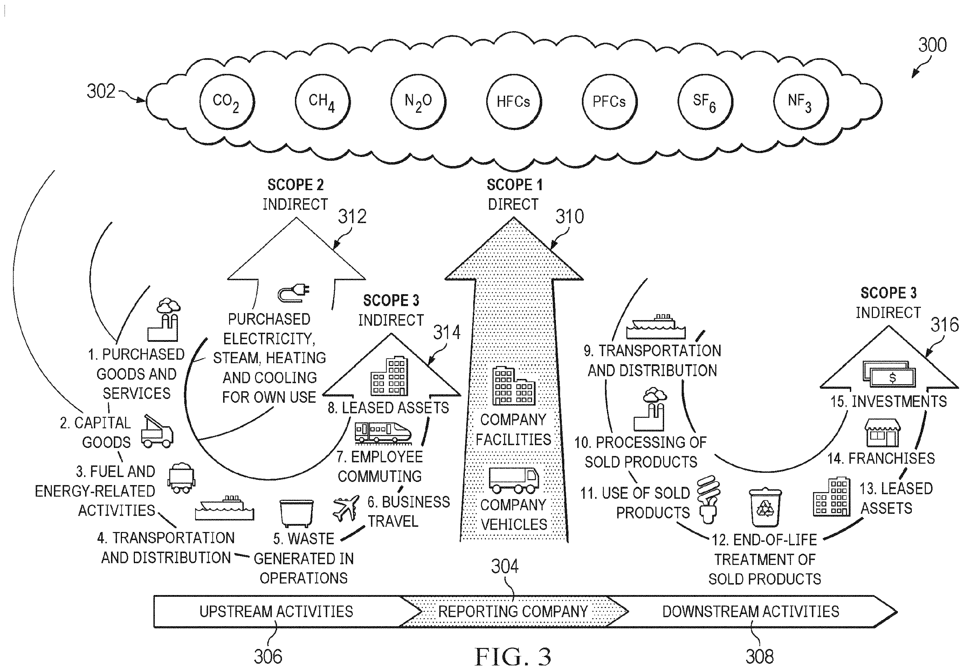

FIGURE 3 illustrates an example classification scheme 300 for different types of greenhouse gas emissions according to this disclosure. The classification scheme 300 here represents an overview of the Greenhouse Gas (GHG) Protocol Corporate Accounting and Reporting Standard, which is used to define total greenhouse gas emissions 302 across a value chain. As shown in FIGURE 3, the classification scheme 300 is used to identify total greenhouse gas emissions 302 for a reporting company 304, where the total greenhouse gas emissions 302 incorporate considerations of the activities of the reporting company 304 itself, as well as upstream activities 306 and downstream activities 308 associated with the reporting company 304. The upstream activities 306 generally relate to materials and energy coming into and used by the reporting company 304, while the downstream activities 308 generally relate to materials and energy coming out of the reporting company 304.

In this example, the greenhouse gas emissions 302 associated with the reporting company 304 include direct emissions 310, which are referred to as "Scope 1" emissions. The direct emissions 310 represent emissions of greenhouse gases that are caused by one or more sources owned or controlled by the reporting company 304. The greenhouse gas emissions 302 associated with the reporting company 304 also include indirect energy emissions 312, which are referred to as "Scope 2" emissions. The indirect energy emissions 312 represent emissions of greenhouse gases that are associated with the generation of energy purchased by the reporting company 304. For example, the indirect energy emissions 312 may represent greenhouse gas emissions caused by the burning of fossil fuels in order to produce the electricity that is used by the reporting company 304.

The greenhouse gas emissions 302 associated with the reporting company 304 additionally include other indirect upstream emissions 314 and other indirect downstream emissions 316, which are collectively referred to as "Scope 3" emissions. These indirect emissions 314 and 316 represent emissions of greenhouse gases that are not included in or captured by the Scope 1 and Scope 2 emissions and that occur within the value chain of the reporting company 304. In this example, there are fifteen types of other indirect emissions that are identified in the classification scheme 300, including eight indirect upstream emissions 314. Here, the eight indirect upstream emissions 314 include emissions of greenhouse gases associated with activities related to purchased goods and services, capital goods, fuel and energy, upstream transportation and distribution, waste generated in operations, business travel, employee commuting, and upstream leased assets.

The indirect upstream emissions 314 associated with purchased goods and services are generally related to emissions of greenhouse gases associated with the extraction and transportation of raw materials and the production of goods and services acquired by the reporting company 304. The indirect upstream emissions 314 associated with capital goods are generally related to emissions of greenhouse gases associated with the extraction and transportation of raw materials and the production of capital goods acquired by the reporting company 304. The indirect upstream emissions 314 associated with fuel and energy-related activities are generally related to emissions of greenhouse gases associated with the extraction and transportation of raw materials and the production of energy or energy-related products (such as spray booth fuel) acquired by the reporting company 304 that are not already included in the direct emissions 310 and the indirect energy emissions 312. The indirect upstream emissions 314 associated with upstream transportation and distribution activities are generally related to emissions of greenhouse gases associated with the transportation and distribution of products and services acquired by the reporting company 304. The indirect upstream emissions 314 associated with waste generated in operations are generally related to emissions of greenhouse gases associated with the disposal and treatment of waste generated during operations by the reporting company 304. The indirect upstream emissions 314 associated with business travel are generally related to emissions of greenhouse gases associated with the transportation of employees for business-related activities. The indirect upstream emissions 314 associated with employee commuting are generally related to emissions of greenhouse gases associated with the transportation of employees between their homes and their worksites. The indirect upstream emissions 314 associated with upstream leased assets are generally related to emissions of greenhouse gases associated with operations of assets by the reporting company 304 that are not already included in the direct emissions 310 and the indirect energy emissions 312.

The fifteen types of Scope 3 emissions identified in the classification scheme 300 also include seven indirect downstream emissions 316. Here, the seven indirect downstream emissions 316 include emissions of greenhouse gases associated with activities related to downstream transportation and distribution, processing of sold products, use of sold products, end-of-life of sold products, downstream leased assets, franchisees, and investments. The indirect downstream emissions 316 associated with downstream transportation and distribution are generally related to emissions of greenhouse gases associated with transportation and distribution of products sold by the reporting company 304. The indirect downstream emissions 316 associated with processing of sold products are generally related to emissions of greenhouse gases associated with processing of intermediate products sold by downstream companies. The indirect downstream emissions 316 associated with the use of sold products are generally related to emissions of greenhouse gases associated with the end use of goods and services sold by the reporting company 304. The indirect downstream emissions 316 associated with end-of-life of sold products are generally related to emissions of greenhouse gases associated with waste disposal and treatment of products sold by the reporting company 304. The indirect downstream emissions 316 associated with downstream leased assets are generally related to emissions of greenhouse gases associated with operation of assets owned by the reporting company 304 and leased to other entities. The indirect downstream emissions 316 associated with franchisees are generally related to emissions of greenhouse gases associated with operation of the reporting company's franchises that are not already included in the direct emissions 310 and the indirect energy emissions 312. The indirect downstream emissions 316 associated with investments are generally related to emissions of greenhouse gases associated with the operation of investments (such as equity or debt investments and project finances) associated with the reporting company 304 that are not already included in the direct emissions 310 and the indirect energy emissions 312.

Note that the classification scheme 300 shown here can provide a relatively thorough collection of all of the greenhouse gas emissions that might be associated with any particular reporting company 304. However, in the context of use with the system 100 (namely with one or more vehicle repair facilities 102), it is possible to significantly simplify which greenhouse gas emissions are and are not included in the direct emissions 310, indirect energy emissions 312, other indirect upstream emissions 314, and other indirect downstream emissions 316 with respect to one or more vehicle repair facilities 102.

Before attempting to identify greenhouse gas emissions 302 for one or more vehicle repair facilities 102, the "operational boundary" of the one or more vehicle repair facilities 102 can be identified. The operational boundary may sometimes be referred to as the "emission boundary" of the one or more vehicle repair facilities 102. The operational boundary clearly defines the scope of direct and indirect greenhouse gas emissions for operations that are attributable to the reporting company 304. In other words, direct and indirect greenhouse gas emissions within the operational boundary are attributable to the reporting company 304, and direct and indirect greenhouse gas emissions outside the operational boundary are not attributable to the reporting company 304. In the context of one or more vehicle repair facilities 102, the operational boundary may be limited to the repair of each vehicle itself. As such, it can be assumed that the operational boundary associated with each vehicle repair facility 102 commences with a vehicle being within a workshop environment and finishes once repair of the vehicle has been completed.

Based on this definition of the operational boundary for each vehicle repair facility 102, it is possible to significantly simplify the estimation of the total greenhouse gas emissions 302 associated with each vehicle repair facility 102 based on the classification scheme 300 described above. For example, a vehicle repair facility 102 may only include one or more spray booths 106 that represent direct sources of "Scope 1" greenhouse gas emissions. As a result, the direct emissions 310 associated with each vehicle repair facility 102 may be determined based on the estimation of the greenhouse gas emissions associated with the combustion of fuel to heat the one or more spray booths 106 of the vehicle repair facility 102 for each vehicle repair being performed. Also, the indirect energy emissions 312 associated with each vehicle repair facility 102 may be determined based on an estimation of the "Scope 2" greenhouse gas emissions associated with purchased electricity that is consumed by the vehicle repair facility 102 for each vehicle repair being performed. This may include estimating the greenhouse gas emissions associated with electricity consumed by the vehicle repair facility 102 during repair of each vehicle within a workshop 104 and during painting of each vehicle within a spray booth 106.

For the other indirect upstream emissions 314, it may be possible to consider only the "Scope 3" greenhouse gas emissions related to purchased goods and services obtained by each vehicle repair facility 102 for each vehicle repair, fuel- and energy-related activities associated with each vehicle repair facility 102 for each vehicle repair, upstream transportation and distribution activities associated with each vehicle repair facility 102 for each vehicle repair, and waste generated during operations by each vehicle repair facility 102 for each vehicle repair. For example, the emissions related to purchased goods and services can represent the emissions of greenhouse gases related to the purchase of primary parts and paints that are specifically used to repair each damaged vehicle. The emissions related to fuel- and energy-related activities can represent well-to-tank (WTT) emissions of greenhouse gases associated with fuel and electricity used by the vehicle repair facility 102 to repair each damaged vehicle that are not included in or captured by the Scope 1 and Scope 2 emissions. The emissions related to upstream transportation and distribution activities can represent the emissions of greenhouse gases related to the transportation of the primary parts and paints that are specifically used to repair each damaged vehicle. The emissions related to waste generated during operations can represent the emissions of greenhouse gases related to waste produced during repair of each damaged vehicle, such as waste from a primary part being fitted onto a damaged vehicle.

As can be seen here, it is possible to exclude from consideration a number of potential sources of greenhouse gas emissions from one or more vehicle repair facilities 102. For example, with respect to the direct emissions 310, it is possible to exclude from consideration the combustion of fossil fuels in transportation owned or operated by each vehicle repair facility 102. This is because each vehicle being repaired is deemed to already be within a workshop 104 and therefore within the operational boundary. Any emissions of greenhouse gases generated while driving a vehicle into and out of a workshop 104, into and out of a spray booth 106, and between the workshop 104 and the spray booth 106 would be minimal. With respect to the indirect energy emissions 312, it is possible to exclude from consideration the consumption of electricity within each vehicle repair facility 102 that is not directly associated with a repair of a damaged vehicle. This is because the identification of greenhouse gas emissions can be determined for each damaged vehicle, and ancillary electricity usage within a vehicle repair facility 102 unrelated to the repair of each damaged vehicle may not be relevant in this particular context.

With respect to the other indirect upstream emissions 314, it is possible to exclude all consumables and non-primary parts from consideration of the emissions related to purchased goods and services. Here, it can be assumed that the consumables and non-primary parts are already within the impressed stock of each vehicle repair facility 102. Also, it is possible to exclude all capital goods from consideration, since it is unlikely that any capital goods are purchased specifically to repair an individual damaged vehicle. Further, it is possible to exclude business travel from consideration, since it is unlikely that repair of a damaged vehicle will require business travel. In addition, it is possible to exclude employee commuting from consideration, since it can be assumed that all employees are already on-site at each vehicle repair facility 102. Finally, it is possible to exclude upstream leased assets from consideration, since it can be assumed that there are no leased assets specifically related to the individual repair of a specific damaged vehicle (and the operational boundary does not expand to a full corporate level).

With respect to the other indirect downstream emissions 316, all of these may be excluded from consideration. For example, downstream transportation may be excluded since the operational boundary ends once a vehicle has been repaired, so any downstream transportation and distribution emissions are attributable to the vehicle's owner or another party. Also, repairs are not processed, so there are no emissions created during the processing of any sold products. Further, it is assumed that each vehicle is being returned to its pre-damaged state. Because of this, any emissions associated with the use or end-of-life of a repaired vehicle are attributable to the vehicle's owner or manufacturer and are not attributable to a vehicle repair facility 102. Moreover, it can be assumed that there are no downstream leased assets or investments specifically related to the individual repair of a specific damaged vehicle. Finally, it can be assumed that the operational boundary of a vehicle repair facility 102 does not extend to a full corporate level so as to encompass any franchises.

Based on these modifications of the classification scheme 300, it is possible for the application server 116 (such as via execution of at least one application 122) to estimate the greenhouse gas emissions for each vehicle repair conducted by one or more vehicle repair facilities 102. The following now describes one specific approach of how the application server 116 may estimate the greenhouse gas emissions for each vehicle repair conducted by one or more vehicle repair facilities 102. While this represents one example of the types of operations that may be performed using the application server 116, any number of modifications may be made to the specific approach described below.

In the specific approach described below, a number of assumptions can be made, which include the following. A damaged vehicle is assumed to already be on-site at a vehicle repair facility 102 and to remain on-site (for the purposes of the operational boundary), and the damaged vehicle is assumed to not combust any fuel while on-site. All waste generated in repairing the vehicle is assumed to be recycled whenever possible and not sent to a landfill or incinerated. All consumables (such as fillers, abrasive discs, sound pads, and non-primary parts) are assumed to be within the impressed stock of the vehicle repair facility 102 and are excluded from emissions estimations. It is assumed that a specific paint (such as AkzoNobel paint) is used in the painting process for the damaged vehicle, although any other suitable paints may be used.

It is assumed that primary parts are sourced from a vehicle manufacturer's manufacturing site as detailed by the vehicle manufacturer. Where no specific parts manufacturing plant has been confirmed by the vehicle manufacturer or where parts can be sourced from multiple plants, it is assumed that the parts come from the nearest vehicle manufacturer-owned plant with the highest number of vehicles sold for the corresponding model. The proximity prioritization may be as follows: region, country, continent, and world. When "green parts" (undamaged or other reusable parts recycled from end-of-life vehicles) are used to repair a damaged vehicle, it is assumed that the green parts are sourced domestically within the country or other region where the vehicle is being repaired. It is assumed that the transportation of parts from a manufacturing/assembly plant is made by heavy goods vehicles (HGVs) to a nominated seaport for that country or other region and that the parts are transported by cargo ship to the destination country or other region. It is assumed that the parts are transported from the destination seaport to a central "parts hub" at an average distance specific to the country or other region of repair from the seaport by HGV (as the specific location of each parts hub may not be available or remain constant). It is assumed that the parts are transported from the parts hub to the vehicle repair facility 102 by a light commercial vehicle (LCF) like a Class II van at an average distance specific to the country or other region of repair (again as the specific location of each vehicle repair facility 102 may not be available). When a journey does not involve sea transportation, it is assumed that the parts are transported to the destination country or other region's parts hub by HGV.

Emissions for each spray booth 106 are based on an estimated energy consumption of 180 kW. A paint repair is assumed to be needed in at least 50% of all repairs requiring paint. All greenhouse gas emissions may be converted into "carbon dioxide equivalent" ($CO_2e$) measurements. $CO_2e$ emissions related to volatile organic compounds released through spraying AkzoNobel or other paints are based on the maximum volatile organic compounds for a base color (since the exact measure of volatile organic compounds can vary depending on colors and mixing ratios).

It is assumed that 56% of the labor time for replace operations (which involve replacing damaged vehicle parts) will be spent using workshop equipment that draws an average electrical load of 3.3 kWh. It is also assumed that 35% of the labor time for repair operations (which involve repairing/renewing damaged vehicle parts) will be spent using workshop equipment that draws an average electrical load of 3.3 kWh. It is further assumed that 63% of the labor time for renewing green parts will be spent using workshop equipment that draws an average electrical load of 3.3 kWh. In addition, it is assumed that 50% of the original $CO_2e$ emissions for green parts are carried forward when calculating the total $CO_2e$ emissions when renewing the green parts.

Various conversion factors are provided below for converting different values into equivalent measurements of $CO_2e$ emissions or other greenhouse gas emission. For example, primary emission conversion factors are based on estimates of the greenhouse gas emissions produced when generating electricity used by a vehicle repair facility 102. In some cases, the primary emission conversion factors take into account transmission and distribution, WTT generation, and WTT transmission and distribution information, which may vary by country or other region. Here, a user may be allowed to select a particular country or other region so that appropriate conversion factors are used. Any primary emission conversion factors or $CO_2e$ emission data can be sourced whenever possible from the sources of the emissions themselves. If this is not possible, the most recent, updated, and verified conversion factors that are available may be used. For country energy conversion factors, verified conversion factors from each country's government or governmental certified department might be used. When a country does not release verified country-specific conversion factor data, the latest verified conversion factors may be used, such as from the Department for Business, Energy and Industrial Strategy in the United Kingdom or the Association of Issuing Bodies (AIB) in Europe. In some cases, the source data may be reviewed periodically (such as monthly) so that conversion factors or other values used below may be updated as needed.

In some cases, emission factors associated with the production of specific vehicle parts can be obtained from "primary material use" conversion factors, such as from the BEIS UK Government GHG Conversion Factors 2022 database. As a particular example, vehicle parts used in repairs may be separated into four distinct categories, namely "bumpers," "panels," "alloy wheels," and "headlights." For each type of vehicle part, there can be an associated conversion factor that converts one or more instances of each type of vehicle part into a corresponding emissions estimate. These conversion factors may be based on the primary material used and can cover extraction, primary processing, manufacturing, and transportation to the vehicle manufacturer's assembly factory. The average weight of a part can be assumed to be not more than 3% less than its heaviest weight to ensure that a conservative approach is used, which helps to avoid under-estimating the greenhouse gas emissions.

Based on these assumptions, the application server 116 (such as via execution of at least one application 122) can estimate the greenhouse gas emissions for each vehicle repair conducted by one or more vehicle repair facilities 102 in the following manner. With respect to the direct emissions 310 associated with each individual vehicle repair conducted by a vehicle repair facility 102, as noted above, the estimation of the direct emissions 310 may be determined based on an estimation of the greenhouse gas emissions associated with the combustion of fuel to heat a spray booth 106 in the vehicle repair facility 102 that is repairing the vehicle. The direct emissions 310 can be higher when replacing a vehicle component (due to the application of a primer to the vehicle component, which occurs within a spray booth 106 in addition to the painting process). Here, emissions can be estimated by multiplying (i) the total fuel usage during a painting process for the vehicle being repaired and (ii) a country or other region's fuel conversion factor.

In some cases, the application server 116 may estimate the direct emissions 310 for each vehicle repair in the following manner.

$$Direct\ Emissions = Spray\ Booth\ Fuel\ \times Fuel\ Conversion\ Factor \qquad (1)$$

Here, *Spray Booth Fuel* represents the total fuel usage of a spray booth 106 when a vehicle being repaired is painted, and *Fuel Conversion Factor* represents a value that converts the fuel usage into a corresponding emissions estimate.

With respect to the indirect energy emissions 312 associated with each individual vehicle repair conducted by a vehicle repair facility 102, as noted above, the estimation of the indirect energy emissions 312 may be determined based on an estimation of the greenhouse gas emissions associated with purchased electricity that is consumed by the vehicle repair facility 102 to repair a specified vehicle. This can include electricity consumed by the vehicle repair facility 102 to repair the specific vehicle within a workshop 104 and to paint of the specific vehicle within a spray booth 106. Here, emissions can be estimated by multiplying (i) the estimated length of time for a repair (such as the total number of labor hours), (ii) the percentage of hours that will involve drawing electricity from workshop equipment (which can vary for replace, renew, and renew green parts operations), and (iii) a country or other region's electricity conversion factor. The amount of electricity needed to paint the vehicle in a spray booth 106 multiplied by the electricity conversion factor can also be included.

In some cases, the application server 116 may estimate the indirect energy emissions 312 for each vehicle repair in the following manner.

$$Indirect\ Energy\ Emissions = (Workshop\ Electricity\ + Spray\ Booth\ Electricity) \times$$

$$Electricity\ Conversion\ Factor \quad (2)$$

$$Workshop\ Electricity\ = Labor\ Panel \times \alpha \times \beta \times Electricity\ Conversion\ Factor \quad (3)$$

$$Spray\ Booth\ Electricity\ = K \times Electricity\ Conversion\ Factor \quad (4)$$

Here, *Workshop Electricity* represents the estimated amount of electricity consumed due to the repair of the vehicle in a workshop 104 of the vehicle repair facility 102, *Spray Booth Electricity* represents the estimated amount of electricity consumed due to the painting of the vehicle in a spray booth 106 of the vehicle repair facility 102, and *Electricity Conversion Factor* represents a conversion factor that converts electricity usage into a corresponding emissions estimate. Also, *Labor Panel* represents the total number of hours of labor estimated to be needed during repair of the vehicle. Further, $\alpha$ represents the average portion of time of the total labor where electricity may be used in the workshop 104 (0.35 for replace operations, 0.56 for renew operations, and 0.63 for renew green parts operations based on the percentages assumed above). In addition, $\beta$ represents the average electricity usage of the vehicle repair facility 102 due to the repair of the vehicle (3.3 kWh for replace, renew/repair, or renew green parts operations as assumed above).

Finally, K represents the average consumption of electricity by a spray booth 106 during a repair (which in some cases may be 21.3855 kWh for renew/repair operations and 14.6687 kWh for replace operations). Note that if a user can declare that all electricity usage by a vehicle repair facility 102 is sourced from one or more 100% renewable energy sources, the indirect energy emissions 312 may be determined to be zero.

With respect to the other indirect upstream emissions 314 associated with each individual vehicle repair conducted by a vehicle repair facility 102, as noted above, the estimation of the other indirect upstream emissions 314 may be determined based on an estimation of the greenhouse gas emissions associated with purchased goods (which are separated into paint and parts below), fuel- and energy-related activities, upstream transportation and distribution activities, and waste. The fuel- and energy-related activities may be ignored here if all fuel- and energy-related activities are accounted for in other emissions estimations. If not, they can be determined here.

For emissions related to paint, the greenhouse gas emissions can be estimated by multiplying the amount of paint used in the vehicle repair (such as in liters) by a paint conversion factor associated with the paint manufacturer's product emissions (minus transportation and processing emissions). The amount of paint used in a repair can vary, such as based on the paint process selected by a user. In some cases, the amount of paint may be estimated by dividing the cost of the paint materials by the manufacturer's recommended retail price for the paint materials.

For emissions related to parts, upstream transportation and distribution activities, and waste, the greenhouse gas emissions can be estimated by considering three different sources of emissions: (i) the manufacture of the parts themselves, (ii) the transportation of the parts, and (iii) the waste associated with the parts. For the manufacture of the parts, the greenhouse gas emissions can be determined by multiplying the weight of each part by a corresponding manufacturing conversion factor. In some cases, as noted above, parts may be classified into four groups, namely bumpers, panels, alloy wheels, and headlights. In these embodiments, the manufacturing conversion factor used can vary based on the type of part. Similarly, for waste involving the parts, the emissions can be determined by multiplying the weight of each part by a corresponding waste disposal conversion factor. Waste disposal conversion factors for different materials or parts may be obtained from various sources, such as BEIS.

For emissions related to the transportation of the parts, the greenhouse gas emissions can be determined by tracing the route traveled by each part to reach a vehicle repair facility 102. As noted above, this may or may not involve travel via seaport, and it typically involves travel to and from a parts hub in a given region. Here, travel distances can be estimated using online tools or other data sources, such as by estimating travel distances by land using an Automobile Association (AA) route planner and optionally by sea using a sea distance measurement tool. Also, as noted above, various average distances (such as from a seaport to a parts hub and from a parts hub to a vehicle repair facility) may be used. In some instances, there may be no consideration of any downtime of the parts at a parts hub so as to avoid accounting for any Scope 1 or Scope 2 emissions from the parts hub (since these would be difficult to estimate and would typically involve very small amounts of emissions). Each estimated travel distance for a segment of a part's travel can be multiplied by the part's weight and a conversion factor to translate the travel into an estimated emission. The specific conversion factor used for each segment of the part's travel is based on the type of vehicle or ship used in that segment of the part's travel. For travel via HGV or LCV, it may be assumed that the vehicle is 100% laden with cargo in order to estimate its emissions. For travel via ship, it may be assumed that the ship is carrying an average load in order to estimate its emissions.

In some cases, the application server 116 may estimate the other indirect energy emissions 314 for each vehicle repair in the following manner.

$$\mathit{Other\ Indirect\ Emissions} = (\mathit{Parts\ Purchase} + \mathit{Paint\ Purchase} + \mathit{Electricity\ Purchase}) \quad (5)$$

$$\mathit{Parts\ Purchase} = \mathit{Parts\ Manufacturing} + \mathit{Parts\ Transportation} + \mathit{Waste} \quad (6)$$

$$\mathit{Parts\ Manufacturing} = \mathit{Parts\ Weight} \times \mathit{Manufacturing\ Conversion\ Factor} \quad (7)$$

$$\mathit{Parts\ Transportation} = \mathit{Parts\ Weight} \times \sum_i (d_i \cdot \mathit{Travel\ Conversion\ Factor}_i) \quad (8)$$

$$\mathit{Parts\ Waste} = \mathit{Parts\ Weight} \times \mathit{Waste\ Conversion\ Factor} \quad (9)$$

$$Paint\ Purchase = Paint\ Used \times Paint\ Conversion\ Factor \qquad (10)$$

Here, *Parts Purchase* represents the greenhouse gas emissions associated with obtaining vehicle parts for repairing a specified vehicle; *Paint Purchase* represents the greenhouse gas emissions associated with obtaining paints for painting the specified vehicle; and *Electricity Purchase* represents the greenhouse gas emissions associated with obtaining electricity for repairing the specified vehicle (which is not already included in the Scope 1 and Scope 2 emissions). If needed, the *Electricity Purchase* emissions can be estimated by multiplying the electricity usage by the *Electricity Conversion Factor* described above. In this example, *Parts Manufacturing* represents the estimated greenhouse gas emissions for manufacturing individual parts, which can be estimated by multiplying each part's weight by the corresponding manufacturing conversion factor *(Manufacturing Conversion Factor)*. Also, *Parts Transportation* represents the estimated greenhouse gas emissions for transporting individual parts, which can be estimated by multiplying the *Parts Weight* by a sum of products. Each product in the sum represents a travel distance $(d_i)$ multiplied by a travel conversion factor *(Travel Conversion Factor$_i$)* that converts a traveled distance into an associated emission, where i represents the number of travel segments (such as by land and possibly by sea). Further, *Parts Waste* represents the estimated emissions for waste associated with individual parts, which can be estimated by multiplying each part's weight by the corresponding waste disposal conversion factor *(Waste Disposal Conversion Factor)*. In addition, the estimated emissions for obtaining paints can be estimated by multiplying the amount of paint *(Paint Used)* by a paint conversion factor *(Paint Conversion Factor)*.

It should be noted that, in some instances, various information described as being used by the application server 116 in the calculations and other processes described above might not actually be available for use by the application server 116. For example, in some cases, a vehicle manufacturer might not provide information identifying the specific weights of all primary parts used in the manufacturer's vehicles. When certain information is not available for use by the application server 116, one or more techniques may be implemented by the application server 116 or other component(s) for estimating that information or for otherwise obtaining suitable replacement information. As a particular example, one or more machine learning models may be trained to estimate parts weights for vehicles, and the one or more machine learning models may be used to provide a part's weight based on an identification of a specific vehicle and specific part for that vehicle. The application server 116 can then use the weight as estimated using the one or more machine learning models during the calculations of the other indirect emissions 314 for the associated vehicle repair as described above. For instance, a machine learning model may be trained to classify a specific vehicle into one of multiple types (such as sedan, truck, sport utility vehicle, etc.) and to estimate the weight of one or more specific parts of the specific vehicle based on its classification and optionally one or more additional parameters associated with the specific vehicle. Here, the machine learning model may be trained using training data that includes known vehicles associated with known vehicle types, known parameters, and known part weights so that the machine learning model can estimate part weights given suitable inputs.

By summing the estimated direct emissions 310, indirect energy emissions 312, and other indirect emissions 314 for each vehicle repair, the application server 116 is able to generate a more-accurate estimate of the total greenhouse gas emissions 302 associated with each vehicle repair. The estimate of the total greenhouse gas emissions 302 associated with each vehicle repair may be used in any suitable manner. For example, in some cases, the total greenhouse gas emissions 302 associated with an individual vehicle repair may be identified and possibly provided to a user, and the user or the application server 116 may select one or more specific operation types for repairing the associated damaged vehicle based on the estimated total greenhouse gas emissions 302. As a particular example, this may allow the application server 116, an insurer, a repair facility, or other party to give an owner of a damaged vehicle the ability to select a specific operation type (such as renew rather than replace) that could result in reduced greenhouse gas emissions associated with the repair of the damaged vehicle.

In other cases, the total greenhouse gas emissions 302 associated with multiple vehicle repairs may be identified, such as for vehicle repairs performed by one or multiple vehicle repair facilities 102 (like those associated with one or more insurers). In some cases, this can be done for multiple vehicle repair facilities 102 in a specified region, such as a city, state/province, or country. The total greenhouse gas emissions 302 associated with the multiple vehicle repairs may be summed in one or more ways (such as monthly and annually) or otherwise processed and used for monitoring or decision-making purposes. For instance, the total greenhouse gas emissions 302 associated with the multiple vehicle repairs over time can be monitored in order to determine whether the one or more vehicle repair facilities 102 (or the one or more insurers associated with the vehicle repairs being performed by the vehicle repair facilities 102) are meeting greenhouse gas reduction targets.

In some embodiments, the application server 116 may perform simulations to estimate the greenhouse gas reductions that might be achieved if different numbers or different percentages of vehicle repairs were switched from using replacement parts to using renewed parts or renewed green parts. For example, the application server 116 may estimate the total greenhouse gas emissions 302 associated with multiple vehicle repairs using replacement parts and estimate the total greenhouse gas emissions 302 associated with the same vehicle repairs using renewed parts or renewed green parts. The application server 116 can then identify the total amount or percentage reduction of greenhouse gas emissions 302 that may be achieved using the renewed or renewed green parts.

The application server 116 may also engage in automated decision-making in order to automatically initiate one or more course of actions, or the application server 116 may identify one or more courses of action for user approval. A course of action here may involve changing how one or more vehicle repairs are performed in order to reduce the total greenhouse gas emissions 302 associated with the vehicle repair(s). For example, based on simulations or other calculations, the application server 116 may determine that switching a specified number or percentage of vehicle repairs from using replacement parts to using renewed parts/green parts would result in a desired reduction of greenhouse gas emissions (possibly while having little or negligible impact on cost). Similarly, the application server 116 may determine that switching certain types of vehicle repairs from using replacement parts to using renewed parts/green parts would result in a desired reduction of greenhouse gas emissions (possibly while having little or negligible impact on cost). The application server 116 may then initiate usage of the renewed parts/green parts in vehicle repairs, either in an automated manner or upon user approval. Ideally, this allows the amount of greenhouse gas emissions (and therefore the amount of pollution) produced as a result of the vehicle repairs to be monitored and reduced over time.

At least some of the information generated by the application server 116 in these or other use cases may be included in one or more graphical user interfaces or reports that are generated and provided to users. Note, however, that the information generated by the application server 116 may be used in any other suitable manner. Also note that one or more estimates of the total greenhouse gas emissions 302 associated with one or more vehicle repairs may be used in any other suitable manner.

It should be noted that the functions shown in or described with respect to FIGURE 3 can be implemented in an application server 116 or other device in any suitable manner. For example, in some embodiments, at least some of the functions shown in or described with respect to FIGURE 3 can be implemented or supported using one or more software applications or other software instructions that are executed by the processing device(s) 202 of the application server 116 or other device. In other embodiments, at least some of the functions shown in or described with respect to FIGURE 3 can be implemented or supported using dedicated hardware components. In general, the functions shown in or described with respect to FIGURE 3 can be performed using any suitable hardware or any suitable combination of hardware and software/firmware instructions.

Although FIGURE 3 illustrates one example of a classification scheme 300 for different types of greenhouse gas emissions, various changes may be made to FIGURE 3. For example, while FIGURE 3 illustrates one example of how greenhouse gas emissions associated with a specific reporting company 304 may be distinguished and classified, other classification schemes may be used. Also, the specific equations, values, and other information described above for estimating greenhouse gas emissions within the classification scheme 300 are for illustration only and can vary as needed or desired. As a particular example, the techniques described above for estimating greenhouse gas emissions involve a number of possible assumptions, as well as various values for conversion factors, energy usage, and other characteristics. Various ones of these assumptions and values can be changed according to particular needs. As specific examples, the conversion factors can easily vary based on location, how energy is generated for use by vehicle repair facilities 102, how vehicle parts or paints are manufactured or transported, and how waste is handled. As another specific example, while average values (like average distances, average amounts of labor, average parts weights, average electrical loads, or average energy usages) are often described as being used above, actual values for these characteristics may be considered by the application server 116.

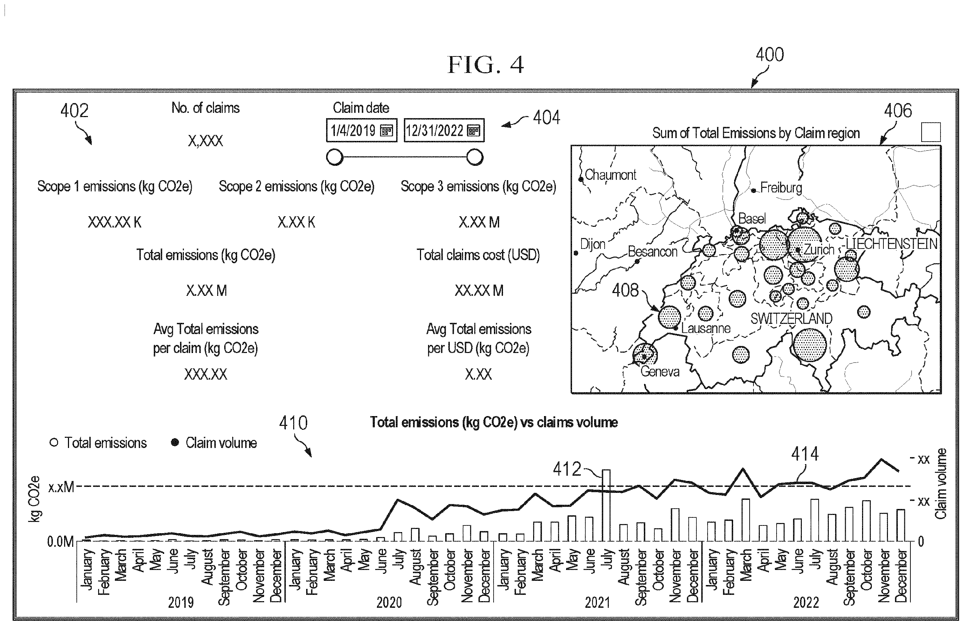

FIGURES 4 through 8 illustrate example graphical user interfaces related to the identification and use of greenhouse gas emission estimates associated with vehicle repair facilities according to this disclosure. The graphical user interfaces shown here may, for example, represent graphical user interfaces that are generated by the application server 116 and provided to one or more users, such as via one or more of the user devices 112a-112d.

As shown in FIGURE 4, a graphical user interface 400 is used to provide information related to greenhouse gas emissions associated with a number of vehicle repairs. In this particular example, it is assumed that the graphical user interface 400 is used with an insurer to identify greenhouse gas emissions associated with vehicle repairs performed by multiple vehicle repair facilities in a specified region. For this reasons, the vehicle repairs are often referred to as or associated with "claims" (since the insurer will typically be responsible for paying for vehicle repairs in response to insurance claims submitted to the insurer). However, "claims" in the graphical user interface 400 may be replaced with "vehicle repairs" or other terminology as needed or desired.

In FIGURE 4, the graphical user interface 400 includes a summary section 402 that identifies overall information regarding claims/vehicle repairs and greenhouse gas emission estimates associated with the claims/vehicle repairs. In this particular example, the summary section 402 identifies the total number of claims/vehicle repairs during a specified time period, as well as "Scope 1," "Scope 2," and "Scope 3" greenhouse gas emissions estimates and a total greenhouse gas emissions estimate for the claims/vehicle repairs. These greenhouse gas emissions estimates can be produced by summing individual emissions estimates for the claims/vehicle repairs, which may be generated as discussed above.

The summary section 402 also identifies the total cost for the claims/vehicle repairs during the specified time period, an average greenhouse gas emissions estimate per claim during the specified time period, and an average greenhouse gas emissions estimate per monetary unit during the specified time period.

Controls 404 allow a user to define the specified time period, which allows the user to control which claims/vehicle repairs are used to produce the information contained in the summary section 402. In this example, the controls 404 include multiple sliders along a bar, which allow the user to change start and end dates that are displayed in text boxes. The user may also be allowed to type dates directly into the text boxes, or the user may be allowed to select calendar icons in the text boxes in order to view a calendar in which the user can navigate and select the start and end dates.

The graphical user interface 400 also includes a map 406 identifying a specified geographic area for which claims/vehicle repairs are being analyzed. In this example, the map 406 identifies a specific country, although the map 406 may identify any other desired geographic area. In some cases, the user may select a specific country or other region (such as via a drop-down menu or other input mechanism), and the graphical user interface 400 may initially display information for the selected region. The map 406 in this example includes multiple indicators 408, where the indicators 408 are associated with different vehicle repair facilities 102 at different geographic locations within the map 406. For instance, each indicator 408 may identify a different city or other location where one or more vehicle repair facilities 102 associated with the claims/vehicle repairs being analyzed are located.

In some embodiments, the indicators 408 may have different sizes, such as when the sizes of the indicators 408 are indicative of the respective numbers of claims/vehicle repairs handled or performed by the corresponding vehicle repair facilities 102 or are indicative of the respective estimated greenhouse gas emissions associated with the corresponding vehicle repair facilities 102. Also, in some embodiments, the map 406 may include controls or otherwise by navigable so that the user can zoom in, zoom out, or move within the map 406. As the map 406 is updated, the claims/vehicle repairs associated with the vehicle repair facilities 102 falling within the current geographical boundaries shown in the map 406 may be identified, and the graphical user interface 400 can be updated to include information about those claims/vehicle repairs. In addition, in some embodiments, each indicator 408 may be selectable by the user in order to view the claims/vehicle repairs associated with the vehicle repair facilities 102 corresponding to the selected indicator 408.

The graphical user interface 400 further includes a graphical summary 410 of the claims/vehicle repairs being analyzed. In this example, the graphical summary 410 includes bars 412 that identify the total greenhouse gas emissions for all claims/vehicle repairs per month within the time period defined by the user or otherwise associated with the graphical user interface 400. The graphical summary 410 also includes a line 414 that identifies the total number of claims/vehicle repairs per month within the time period defined by the user or otherwise associated with the graphical user interface 400.

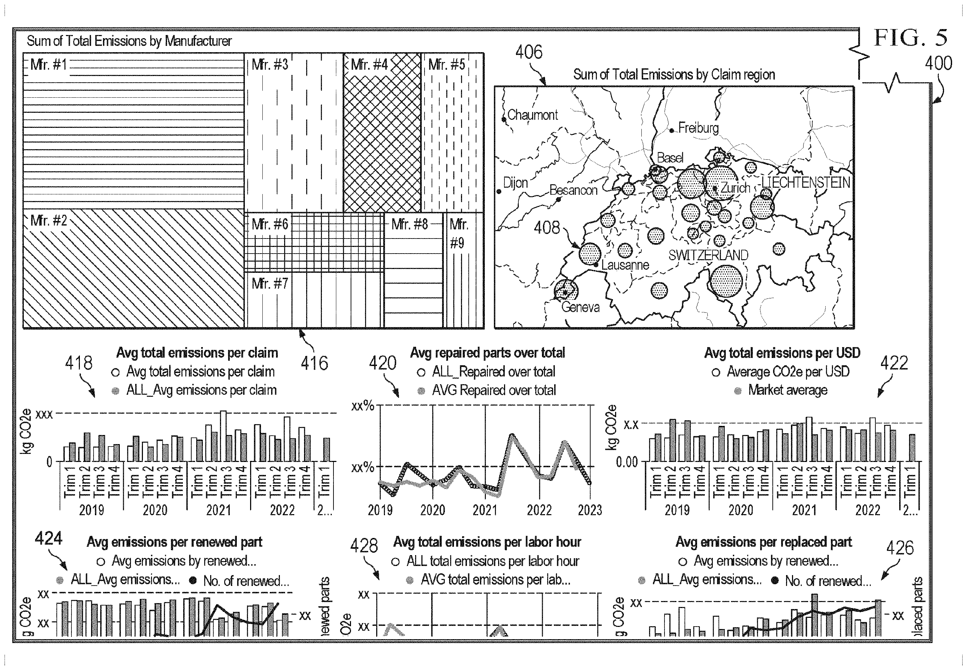

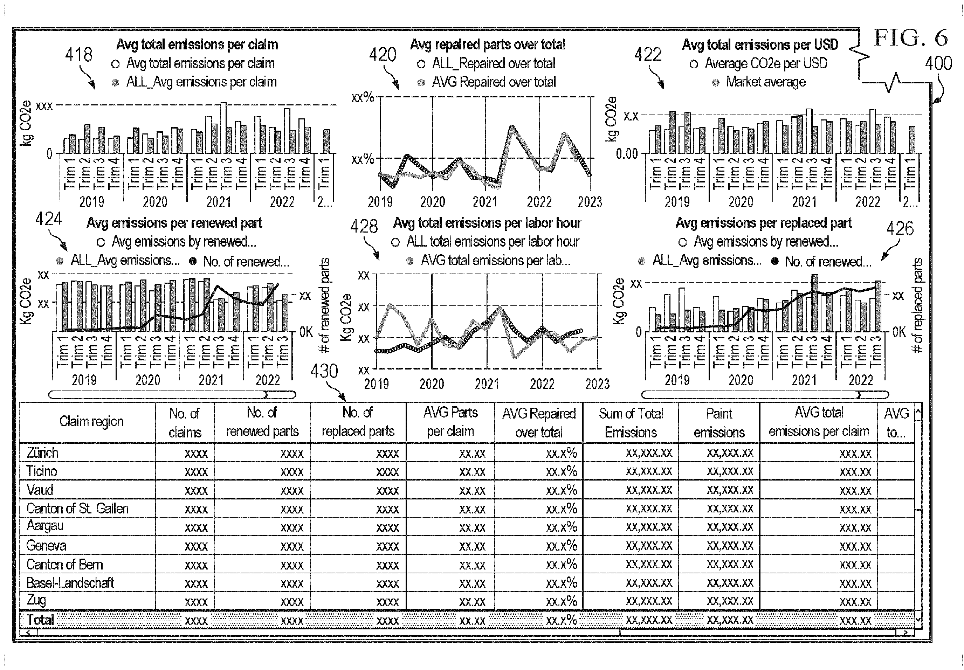

As shown in FIGURES 5 and 6, the graphical user interface 400 can also include a plot 416 graphically identifying different vehicle manufacturers associated with the claims/vehicle repairs. For example, the plot 416 can include one section for each vehicle manufacturer, where the size of each section depicts the relative number of claims/vehicle repairs associated with that vehicle manufacturer (so larger sections are associated with more claims/vehicle repairs). In some cases, each section of the plot 416 may be selectable by the user in order to view information related to the claims/vehicle repairs for vehicles involving the associated vehicle manufacturer.

The graphical user interface 400 can further include a number of plots 418-428, which may be associated with all claims/vehicle repairs being analyzed and/or the claims/vehicle repairs associated with a selected vehicle manufacturer. In this example, the plot 418 identifies the average greenhouse gas emissions across claims/vehicle repairs for all vehicle manufacturers and the average greenhouse gas emissions across claims/vehicle repairs for a selected vehicle manufacturer, and this comparison can be done for different vehicle trims. The plot 420 identifies the average number of total repaired parts (replaced or renewed) across claims/vehicle repairs for all vehicle manufacturers and across claims/vehicle repairs for the selected vehicle manufacturer over time. The plot 422 identifies the average greenhouse gas emissions per monetary unit across claims/vehicle repairs for the selected vehicle manufacturer compared to the market average for all manufacturers, and this comparison can be done for different vehicle trims. The plot 424 identifies the average greenhouse gas emissions per renewed part across claims/vehicle repairs for the selected vehicle manufacturer and for all vehicle manufacturers, and a line identifies the total number of renewed parts. The plot 426 identifies the average greenhouse gas emissions per replaced part across claims/vehicle repairs for the selected vehicle manufacturer and for all vehicle manufacturers, and a line identifies the total number of replaced parts. The plot 428 identifies the average greenhouse gas emissions per hour of labor across claims/vehicle repairs for the selected vehicle manufacturer and for all vehicle manufacturers. Note that if a specific vehicle manufacturer is not selected using the plot 416, contents of the plots 418-428 related to a specific vehicle manufacturer may be omitted.

In addition, the graphical user interface 400 can include a table 430 identifying various information about the claims/vehicle repairs associated with the geographical area presented in the map 406. In this particular example, the table 430 identifies different cities within the map 406. For each city, the table 430 identifies the total number of claims/vehicle repairs and the total numbers of renewed and replaced parts associated with those claims/vehicle repairs. For each city, the table 430 also identifies the average number of parts repaired per claim/vehicle repair and the average number of parts per claim/vehicle repair compared to the total number parts repaired. For each city, the table 430 further identifies various individual and total estimated greenhouse gas emissions per claim/vehicle repair.

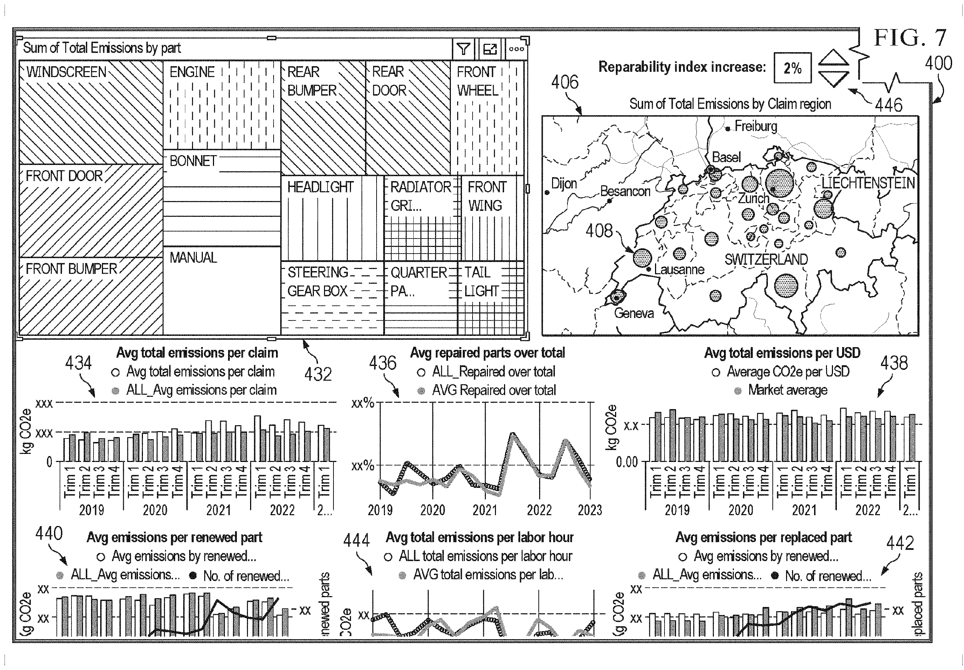

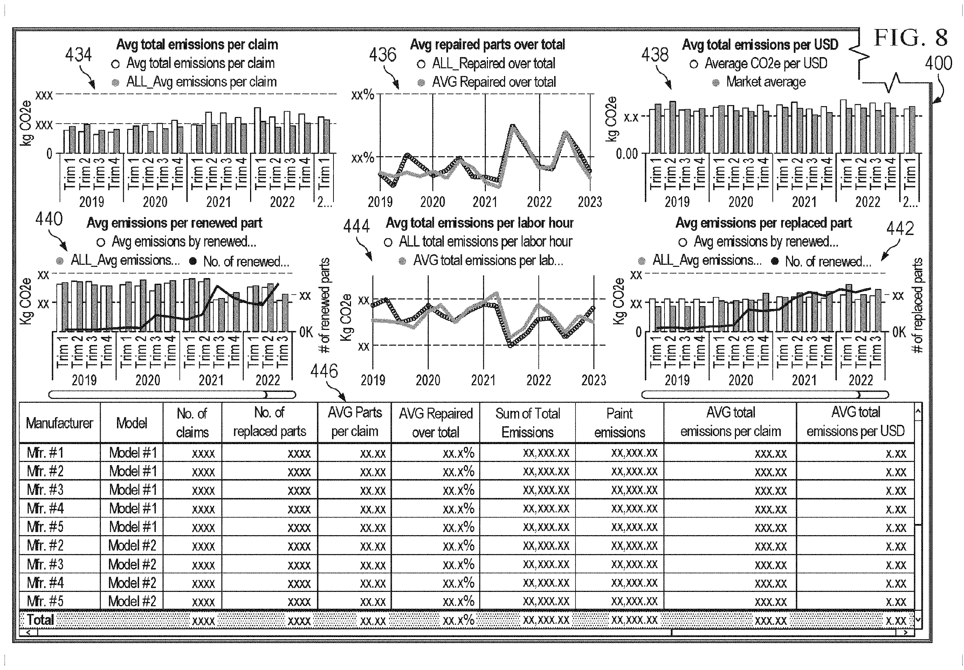

As shown in FIGURES 7 and 8, the plot 416 may be replaced with a plot 432 graphically identifying different types of vehicle parts associated with the claims/vehicle repairs. For example, the plot 432 can include one section for each type of vehicle part, where the size of each section depicts the relative number of claims/vehicle repairs associated with that type of vehicle part (so larger sections are associated with more claims/vehicle repairs involving that type of part). In some cases, each section of the plot 432 may be selectable by the user in order to view information related to the claims/vehicle repairs for vehicles involving the associated type of vehicle part. The graphical user interface 400 can further include a number of plots 434-444, which may be associated with all claims/vehicle repairs being analyzed and/or the claims/vehicle repairs associated with a selected type of vehicle part. Each of the plots 434-444 may be similar to the plots 418-428 described above, except the plots 434-444 may relate to average greenhouse gas emissions, average number of total repaired parts, average greenhouse gas emissions per monetary unit, average greenhouse gas emissions per renewed part, average greenhouse gas emissions per replaced part, and average greenhouse gas emissions per hour of labor for the specific selected type of vehicle part (rather than vehicle manufacturer). Note that if a specific type of vehicle part is not selected using the plot 432, contents of the plots 434-444 related to a specific type of vehicle part may be omitted.

In addition, a table 446 identifying various information about the claims/vehicle repairs associated with vehicle parts may be presented. In this particular example, the table 446 identifies different vehicle manufacturers and vehicle models. For each vehicle manufacturer/ vehicle model pair, the table 446 identifies the total number of claims/vehicle repairs and the total numbers of replaced parts associated with the vehicle manufacturer/vehicle model pair. For each vehicle manufacturer/vehicle model pair, the table 446 also identifies the average number of parts repaired per claim/vehicle repair and the average number of parts per claim/vehicle repair compared to the total number parts repaired for that vehicle manufacturer/ vehicle model pair. For each vehicle manufacturer/vehicle model pair, the table 446 further identifies various individual and total estimated greenhouse gas emissions per claim/vehicle repair for that vehicle manufacturer/vehicle model pair.

At least one control may be provided in the graphical user interface 400 for simulation, control, or other purposes. For example, a control 446 is shown in FIGURE 7 (although it may be provided in FIGURE 4, 5, or elsewhere) and can be used to simulate a change in the number of claims/vehicle repairs involving renewed rather than replaced vehicle parts. In this example, a user may use arrows to increase or decrease a percentage value presented in a text box, or the user may type a percentage value directly into the text box. The application server 116 can estimate what the greenhouse gas emissions and other characteristics of the claims/vehicle repairs would have been had an identified percentage of the claims/vehicle repairs been performed using renewed parts rather than replacement parts. The application server 116 can update the plots 41-428 or 434-444 (depending on which are being displayed) to show the results from the simulation.

As can be seen here, the graphical user interface 400 provides a convenient mechanism for viewing greenhouse gas emission estimations associated with claims/vehicle repairs within a specified geographic area. The graphical user interface 400 allows users to quickly view greenhouse gas emission estimation information about individual portions of the specified geographic area (such as individual cities or states/provinces) and greenhouse gas emission estimation information about specific types of vehicles or vehicle components. The graphical user interface 400 also allows users to initiate simulations of how greenhouse gas emissions might change based on modifications to how vehicle repairs are performed. This gives users the ability to quickly identify how vehicle repairs might be modified going forward to reduce greenhouse gas emissions, meet target greenhouse gas emission thresholds, or perform other functions.

Note that in FIGURES 4 through 8, numerical values are often represented using "XX" or "xx" notations, which is done merely for convenience and to avoid the use of specific numerical values here. Also note that certain values may have magnitude indicators (such as "K" for thousands and "M" for millions), percentage indicators, or other indicators and that certain values may be shown as having decimal forms or certain numbers of specified digits. These are for illustration and explanation only and do not limit the graphical user interface 400 to presenting values having these indicators, magnitudes, or forms. In general, numerical values may be presented in any suitable manner within the graphical user interface 400.

Although FIGURES 4 through 8 illustrate examples of graphical user interfaces related to the identification and use of greenhouse gas emission estimates associated with vehicle repair facilities, various changes may be made to FIGURES 4 through 8. For example, information associated with greenhouse gas emissions from vehicle repair facilities may be used in any other suitable manner. Also, the content, layout, and arrangement of the information in the graphical user interfaces shown here can easily vary depending on the implementation. In some cases, one or more templates may be used to generate each graphical user interface, and users could use one or more predefined templates or create their own templates for use in generating graphical user interfaces. In addition, while certain input/output mechanisms are shown here and described above (such as text boxes, slidable controls, clickable controls, and navigable maps), any other suitable input/output mechanisms may be used to receive or provide information in the graphical user interfaces.

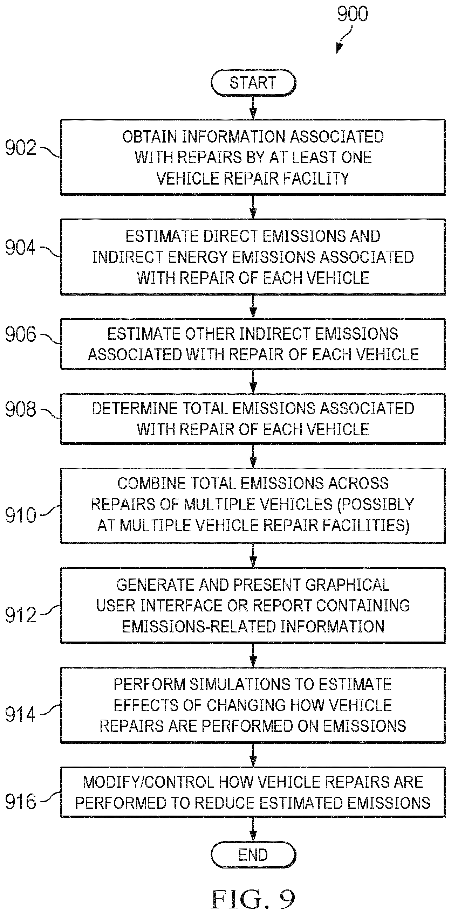

FIGURE 9 illustrates an example method 900 for identifying and using greenhouse gas emission estimates associated with vehicle repair facilities according to this disclosure. For ease of explanation, the method 900 shown in FIGURE 9 is described as being performed using the application server 116 in the system 100 of FIGURE 1, where the application server 116 may be implemented using one or more instances of the device 200 of FIGURE 2. However, the method 900 of FIGURE 9 may be performed using any other suitable device(s) and in any other suitable system(s).

As shown in FIGURE 9, information associated with repairs by at least one vehicle repair facility is obtained at step 902. This may include, for example, the application server 116 obtaining information identifying claims or other repairs that have been, are being, or will be made to one or more damaged vehicles by one or more vehicle repair facilities 102. In some cases, the information can identify repairs associated with multiple vehicles (and possibly a large number of vehicles) by one or multiple vehicle repair facilities 102 (and possibly a large number of vehicle repair facilities 102). The information here can typically identify the vehicle manufacturer, vehicle model, vehicle trim, color, and other characteristics of each damaged vehicle. The information here can also typically identify the repairs associated with each vehicle, such as one or more primary parts that have been, are being, or will be used in the repair of each damaged vehicle and any painting, priming, or other operations that have been, are being, or will be performed to repair each damaged vehicle. The information here may be obtained in any suitable manner, such as from the database 120 via the database server 118.

Direct emissions of greenhouse gases and indirect energy emissions of greenhouse gases are estimated for each vehicle repair at step 904. This may include, for example, the application server 116 using the type of repair (such as renew or replace) for each primary part associated with each vehicle repair to determine the estimated emissions associated with operation of a spray booth 106, which provides an estimate of the "Scope 1" emissions associated with each vehicle repair. In some cases, this can be done using Equation (1) described above. This may also include the application server 116 using the type of repair (such as renew or replace) for each primary part associated with each vehicle repair to determine the estimated amount of electricity to be used in a workshop 104 and a spray booth 106, which provides an estimate of the "Scope 2" emissions associated with each vehicle repair. In some cases, this can be done using Equations (2)-(4) described above. As noted above, if a user is able to indicate that all electricity used during a vehicle repair is sourced from one or more 100% renewable energy sources, the "Scope 2" emissions here may be set to zero. For percentages less than 100% but greater than 0%, the "Scope 2" emissions here may be scaled to account for the partial generation of consumed electricity using one or more clean energy sources.

Other indirect emissions of greenhouse gases are estimated for each vehicle repair at step 906. This may include, for example, the application server 116 using a weight of each primary part to estimate the greenhouse gas emissions associated with the manufacture of that primary part. This may also include the application server 116 using the weight of each primary part and a predicted travel path of that primary part to estimate the greenhouse gas emissions associated with the transport of that primary part to the corresponding vehicle repair facility 102 that uses the primary part. This may further include the application server 116 using the weight of each primary part to estimate the greenhouse gas emissions associated with waste disposal. In addition, this may include the application server 116 using a quantity of paints used or to be used during a repair to estimate the greenhouse gas emissions associated with the painting of the vehicle during each vehicle repair. In some cases, this can be done using Equations (5)-(10) described above. The total emissions of greenhouse gases are determined for each vehicle repair at step 908. This may include, for example, the application server 116 summing the direct emissions, indirect energy emissions, and other indirect emissions previously estimated for each vehicle repair.

The total emissions of greenhouse gases for each vehicle repair may be used in any suitable manner and for any suitable purpose(s). For example, in FIGURE 9, the total emissions of greenhouse gases for multiple vehicle repairs may be combined at step 910. This may include, for example, the application server 116 summing the total emissions of greenhouse gases for multiple vehicle repairs performed at one or more vehicle repair facilities 102. This may allow, for instance, the emissions associated with each vehicle repair facility 102 to be identified over time in order to determine if the emissions are improving or the vehicle repair facility 102 is meeting targeted goals. In some cases, this can be done for vehicle repairs across multiple vehicle repair facilities 102, such as the vehicle repair facilities 102 in a specified geographical area.

A graphical user interface or report containing emission-related information may be generated and presented at step 912. This may include, for example, the application server 116 generating a graphical user interface 400 that includes estimated emissions and related information for multiple vehicle repairs, such as for all or a subset of vehicle repairs in a specified geographic area (which may be controlled using a map 406) and during a specified time period (which may be controlled using one or more controls 404). This may also or alternatively include the application server 116 generating a report that includes estimated emissions and related information for multiple vehicle repairs, such as for each vehicle repair facility 102 in a given region. This may allow personnel to review the report, determine whether the vehicle repair facilities 102 are individually or collectively meeting emissions goals, and take corrective action if not. Simulations may be performed to estimate the effects of changing how vehicles are repaired on emissions at step 914.

This may include, for example, the application server 116 estimating how emissions might change if more or fewer vehicle repairs involved the use of renewed parts rather than replacement parts (or vice versa). In some cases, this may be done based on user input identifying how many of the vehicle repairs should or should not involve the use of renewed or replacement parts.

The estimated emissions may be used to modify or control how current or subsequent repairs are made to vehicles at step 916. This may include, for example, the application server 116 controlling current or subsequent repairs so that additional renewed parts or additional replacement parts are used in the repairs of vehicles or making recommendations (for approval by one or more users) that current or subsequent repairs use renewed or replacement parts. This may also include the application server 116 determining whether painting one or more vehicles might be done using ultraviolet primer or other approaches that might not require the use of a spray booth 106 or that might allow for reduced operations of a spray booth 106. In general, the application server 116 may use any suitable logic to determine how vehicle repairs might be performed in a manner that reduces overall emissions associated with the vehicle repairs.

Although FIGURE 9 illustrates one example of a method 900 for identifying and using greenhouse gas emission estimates associated with vehicle repair facilities, various changes may be made to FIGURE 9. For example, while shown as a series of steps, various steps in FIGURE 9 may overlap, occur in parallel, occur in a different order, or occur any number of times. Also, greenhouse gas emission estimates may be used in any other or additional manner.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive (HDD), a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

**Claims**

1. A method comprising:

   obtaining information associated with one or more vehicle repairs by one or more vehicle repair facilities;
   identifying an estimate of direct emissions of greenhouse gases associated with each of the one or more vehicle repairs;

identifying an estimate of indirect energy emissions of greenhouse gases associated with each of the one or more vehicle repairs;

identifying an estimate of other indirect emissions of greenhouse gases associated with each of the one or more vehicle repairs; and

generating a total estimate of greenhouse gas emissions associated with each of the one or more vehicle repairs based on the estimate of direct emissions, the estimate of indirect energy emissions, and the estimate of other indirect emissions associated with each of the one or more vehicle repairs.

2. The method of Claim 1, wherein:

the information is associated with multiple vehicle repairs by multiple vehicle repair facilities; and

the method further comprises adjusting or controlling how at least some of the vehicle repairs are performed by at least some of the vehicle repair facilities in order to reduce total emissions of greenhouse gases associated with the multiple vehicle repairs.

3. The method of Claim 2, wherein adjusting or controlling how at least some of the vehicle repairs are performed comprises adjusting or controlling whether primary parts used in at least some of the vehicle repairs represent renewed parts or replacement parts.

4. The method of any preceding claim, wherein:

the information is associated with multiple vehicle repairs by multiple vehicle repair facilities; and

the method further comprises generating a graphical user interface comprising (i) a map with one or more indicators identifying any of the vehicle repair facilities within a displayed geographical area and (ii) emissions-related information associated with the vehicle repair facilities identified by the one or more indicators in the map.

5. The method of any preceding claim, wherein:

the information is associated with multiple vehicle repairs; and

the method further comprises:

receiving user input defining a modification to how a subset of the vehicle repairs are or could be performed; and

simulating, based on the user input, how total emissions associated with the multiple vehicle repairs would change based on the modification.

6. The method of any preceding claim, wherein:

identifying the estimate of direct emissions of greenhouse gases associated with each of the one or more vehicle repairs comprises identifying, for each of the one or more vehicle repairs, the estimate of direct emissions based on a type of repair to a damaged vehicle and an estimated fuel usage by a spray booth to complete the repair to the damaged vehicle; and

identifying the estimate of indirect energy emissions of greenhouse gases associated with each of the one or more vehicle repairs comprises identifying, for each of the one or more vehicle repairs, an estimate of electricity used in a workshop and the spray booth to complete the repair to the damaged vehicle.

7. The method of any preceding claim, wherein identifying the estimate of other indirect emissions of greenhouse gases associated with each of the one or more vehicle repairs comprises, for each of the one or more vehicle repairs:

identifying an estimate of emissions of greenhouse gases associated with manufacture of each primary part used in the vehicle repair;

identifying an estimate of emissions of greenhouse gases associated with transportation of each primary part used in the vehicle repair;

identifying an estimate of emissions of greenhouse gases associated with waste disposal; and

identifying an estimate of emissions of greenhouse gases associated with paint used in the vehicle repair.

8. The method of any preceding claim, wherein:

the estimate of the other indirect emissions of greenhouse gases associated with each of the one or more vehicle repairs is based on a weight of a vehicle part used in the vehicle repair; and

for each of at least one of the one or more vehicle repairs, the weight of the vehicle part is estimated using a machine learning model, the machine learning model trained to classify a vehicle type associated with the vehicle repair and to use the classified vehicle type to estimate the weight of the vehicle part.

9. An apparatus comprising:
at least one processing device configured to:

obtain information associated with one or more vehicle repairs by one or more vehicle repair facilities;
identify an estimate of direct emissions of greenhouse gases associated with each of the one or more vehicle repairs;
identify an estimate of indirect energy emissions of greenhouse gases associated with each of the one or more vehicle repairs;
identify an estimate of other indirect emissions of greenhouse gases associated with each of the one or more vehicle repairs; and
generate a total estimate of greenhouse gas emissions associated with each of the one or more vehicle repairs based on the estimate of direct emissions, the estimate of indirect energy emissions, and the estimate of other indirect emissions associated with each of the one or more vehicle repairs.

10. The apparatus of claim 9, wherein the at least one processing device is configured to perform the method of any of claims 1 to 8.

11. A non-transitory machine-readable medium containing instructions that when executed cause at least one processor to:

obtain information associated with one or more vehicle repairs by one or more vehicle repair facilities;
identify an estimate of direct emissions of greenhouse gases associated with each of the one or more vehicle repairs;
identify an estimate of indirect energy emissions of greenhouse gases associated with each of the one or more vehicle repairs;
identify an estimate of other indirect emissions of greenhouse gases associated with each of the one or more vehicle repairs; and
generate a total estimate of greenhouse gas emissions associated with each of the one or more vehicle repairs based on the estimate of direct emissions, the estimate of indirect energy emissions, and the estimate of other indirect emissions associated with each of the one or more vehicle repairs.

12. The non-transitory machine-readable medium of claim 11, wherein the instructions when executed cause the at least one processor to perform the method according to any of claims 1 to 8.

FIG. 1

FIG. 2

FIG. 3

FIG. 4

400

402

No. of claims

X,XXX

Claim date

1/4/2019    12/31/2022

404

406

Sum of Total Emissions by Claim region

Scope 1 emissions (kg CO2e)     Scope 2 emissions (kg CO2e)     Scope 3 emissions (kg CO2e)

XXX.XX K                    X.XX K                        X.XX M

Total emissions (kg CO2e)                    Total claims cost (USD)

X.XX M                                XX.XX M

Avg Total emissions                         Avg Total emissions
per claim (kg CO2e)                        per USD (kg CO2e)

XXX.XX                                X.XX

Chaumont

Freiburg

Basel

Dijon    Besancon                Zurich    LIECHTENSTEIN

408

Lausanne    SWITZERLAND

Geneva

410

Total emissions (kg CO2e) vs claims volume

○ Total emissions   ● Claim volume

412

414

kg CO2e

x.xM

0.0M

January February March April May June July August September October November December January February March April May June July August September October November December January February March April May June July August September October November December January February March April May June July August September October November December

2019                    2020                    2021                    2022

xx

xx

0

Claim volume

EP 4 432 181 A1

FIG. 5

400

Sum of Total Emissions by Manufacturer

| Mfr. #1 | Mfr. #3 | Mfr. #4 | Mfr. #5 |
| Mfr. #2 | Mfr. #6 | Mfr. #8 | Mfr. #9 |
| | Mfr. #7 | | |

406

Sum of Total Emissions by Claim region

Chaumont — Freiburg — Basel — Dijon — Besancon — Zurich — LIECHTENSTEIN — 408 — Lausanne — SWITZERLAND — Geneva

418 — 416

**Avg total emissions per claim**
o Avg total emissions per claim
● ALL_Avg emissions per claim

kg CO2e — xxx — 0
Trim 1 Trim 2 Trim 3 Trim 4 | Trim 1 Trim 2 Trim 3 Trim 4 | Trim 1 Trim 2 Trim 3 Trim 4 | Trim 1 Trim 2 Trim 3 Trim 4 | Trim 1
2019 | 2020 | 2021 | 2022 | 2...

420

**Avg repaired parts over total**
o ALL_Repaired over total
● AVG Repaired over total

xx% — xx%
2019 2020 2021 2022 2023

**Avg total emissions per USD** — 422
o Average CO2e per USD
● Market average

kg CO2e — x.x — 0.00
Trim 1 Trim 2 Trim 3 Trim 4 | Trim 1 Trim 2 Trim 3 Trim 4 | Trim 1 Trim 2 Trim 3 Trim 4 | Trim 1 Trim 2 Trim 3 Trim 4 | Trim 1
2019 | 2020 | 2021 | 2022 | 2...

424

**Avg emissions per renewed part**
o Avg emissions by renewed...
● ALL_Avg emissions... ● No. of renewed...

g CO2e — xx — xx — xx — renewed parts

428

**Avg total emissions per labor hour**
o ALL total emissions per labor hour
● AVG total emissions per lab...

O2e — xx — xx

**Avg emissions per replaced part** — 426
o Avg emissions by renewed...
● ALL_Avg emissions... ● No. of renewed...

g CO2e — xx — xx — placed parts

EP 4 432 181 A1

# FIG. 6

400

**418** Avg total emissions per claim
- Avg total emissions per claim
- ALL_Avg emissions per claim

**420** Avg repaired parts over total
- ALL_Repaired over total
- AVG Repaired over total

**422** Avg total emissions per USD
- Average CO2e per USD
- Market average

**424** Avg emissions per renewed part
- Avg emissions by renewed...
- ALL_Avg emissions...  • No. of renewed...

**426** Avg emissions per replaced part
- Avg emissions by renewed...
- ALL_Avg emissions...  • No. of renewed...

**428** Avg total emissions per labor hour
- ALL total emissions per lab...
- AVG total emissions per lab...

430

| Claim region | No. of claims | No. of renewed parts | No. of replaced parts | AVG Parts per claim | AVG Repaired over total | Sum of Total Emissions | Paint emissions | AVG total emissions per claim |
|---|---|---|---|---|---|---|---|---|
| Zürich | xxxx | xxxx | xxxx | xx.xx | xx.x% | xx,xxx.xx | xx,xxx.xx | xxx.xx |
| Ticino | xxxx | xxxx | xxxx | xx.xx | xx.x% | xx,xxx.xx | xx,xxx.xx | xxx.xx |
| Vaud | xxxx | xxxx | xxxx | xx.xx | xx.x% | xx,xxx.xx | xx,xxx.xx | xxx.xx |
| Canton of St. Gallen | xxxx | xxxx | xxxx | xx.xx | xx.x% | xx,xxx.xx | xx,xxx.xx | xxx.xx |
| Aargau | xxxx | xxxx | xxxx | xx.xx | xx.x% | xx,xxx.xx | xx,xxx.xx | xxx.xx |
| Geneva | xxxx | xxxx | xxxx | xx.xx | xx.x% | xx,xxx.xx | xx,xxx.xx | xxx.xx |
| Canton of Bern | xxxx | xxxx | xxxx | xx.xx | xx.x% | xx,xxx.xx | xx,xxx.xx | xxx.xx |
| Basel-Landschaft | xxxx | xxxx | xxxx | xx.xx | xx.x% | xx,xxx.xx | xx,xxx.xx | xxx.xx |
| Zug | xxxx | xxxx | xxxx | xx.xx | xx.x% | xx,xxx.xx | xx,xxx.xx | xxx.xx |
| Total | xxxx | xxxx | xxxx | xx.xx | xx.x% | xx,xxx.xx | xx,xxx.xx | xxx.xx |

kg CO2e

# of renewed parts

# of replaced parts

FIG. 7

Sum of Total Emissions by part

WINDSCREEN

ENGINE

REAR BUMPER

REAR DOOR

FRONT WHEEL

BONNET

FRONT DOOR

HEADLIGHT

RADIATOR GRI...

FRONT WING

FRONT BUMPER

MANUAL

STEERING GEAR BOX

QUARTER PA...

TAIL LIGHT

406

Reparability index increase: 2%

400

446

Sum of Total Emissions by Claim region

Freiburg

Basel

Dijon

Besancon

Zurich

LIECHTENSTEIN

408

SWITZERLAND

Lausanne

Geneva

434  Avg total emissions per claim
○ Avg total emissions per claim
● ALL_Avg emissions per claim
432

436  Avg repaired parts over total
○ ALL_Repaired over total
● AVG Repaired over total

Avg total emissions per USD
○ Average CO2e per USD
● Market average
438

kg CO2e    xxx
xxx
0

Trim 1 Trim 2 Trim 3 Trim 4 Trim 1 Trim 2 Trim 3 Trim 4 Trim 1 Trim 2 Trim 3 Trim 4 Trim 1 Trim 2 Trim 3 Trim 4 Trim 1
2019   2020   2021   2022   2...

xx%
xx%
xx%
2019  2020  2021  2022  2023

kg CO2e   x.x
0.00

Trim 1 Trim 2 Trim 3 Trim 4 Trim 1 Trim 2 Trim 3 Trim 4 Trim 1 Trim 2 Trim 3 Trim 4 Trim 1 Trim 2 Trim 3 Trim 4 Trim 1
2019   2020   2021   2022   2...

440  Avg emissions per renewed part
○ Avg emissions by renewed...
● ALL_Avg emissions...  ● No. of renewed...

444  Avg total emissions per labor hour
○ ALL total emissions per labor hour
● AVG total emissions per lab...

Avg emissions per replaced part
○ Avg emissions by renewed...
● ALL_Avg emissions...  ● No. of renewed...
442

kg CO2e   xx
xx
renewed parts   xx

CO2e   xx
xx

kg CO2e   xx
xx
placed parts   xx

FIG. 8

Avg total emissions per claim (434)
○ Avg total emissions per claim
● ALL_Avg emissions per claim

Avg repaired parts over total (436)
○ ALL_Repaired over total
● AVG Repaired over total

Avg total emissions per USD (438)
○ Average CO2e per USD
● Market average

Avg emissions per renewed part (440)
○ Avg emissions by renewed...
● ALL_Avg emissions... ● No. of renewed...

Avg total emissions per labor hour (444)
○ ALL total emissions per labor hour
● AVG total emissions per lab...

Avg emissions per replaced part (442)
○ Avg emissions by renewed...
● ALL_Avg emissions... ● No. of renewed...

| Manufacturer | Model | No. of claims | No. of replaced parts | AVG Parts per claim | AVG Repaired over total | Sum of Total Emissions | Paint emissions | AVG total emissions per claim | AVG total emissions per USD |
|---|---|---|---|---|---|---|---|---|---|
| Mfr. #1 | Model #1 | xxxx | xxxx | xx.xx | xx.x% | xx,xxx.xx | xx,xxx.xx | xxx.xx | x.xx |
| Mfr. #2 | Model #1 | xxxx | xxxx | xx.xx | xx.x% | xx,xxx.xx | xx,xxx.xx | xxx.xx | x.xx |
| Mfr. #3 | Model #1 | xxxx | xxxx | xx.xx | xx.x% | xx,xxx.xx | xx,xxx.xx | xxx.xx | x.xx |
| Mfr. #4 | Model #1 | xxxx | xxxx | xx.xx | xx.x% | xx,xxx.xx | xx,xxx.xx | xxx.xx | x.xx |
| Mfr. #5 | Model #1 | xxxx | xxxx | xx.xx | xx.x% | xx,xxx.xx | xx,xxx.xx | xxx.xx | x.xx |
| Mfr. #2 | Model #2 | xxxx | xxxx | xx.xx | xx.x% | xx,xxx.xx | xx,xxx.xx | xxx.xx | x.xx |
| Mfr. #3 | Model #2 | xxxx | xxxx | xx.xx | xx.x% | xx,xxx.xx | xx,xxx.xx | xxx.xx | x.xx |
| Mfr. #4 | Model #2 | xxxx | xxxx | xx.xx | xx.x% | xx,xxx.xx | xx,xxx.xx | xxx.xx | x.xx |
| Mfr. #5 | Model #2 | xxxx | xxxx | xx.xx | xx.x% | xx,xxx.xx | xx,xxx.xx | xxx.xx | x.xx |
| Total | | xxxx | xxxx | xx.xx | xx.x% | xx,xxx.xx | xx,xxx.xx | xxx.xx | x.xx |

EP 4 432 181 A1

900

```
                    ┌─────────┐
                    │  START  │
                    └─────────┘
                         │
                         ▼
        ┌──────────────────────────────────┐
  902 ─│ OBTAIN INFORMATION ASSOCIATED     │
        │ WITH REPAIRS BY AT LEAST ONE      │
        │ VEHICLE REPAIR FACILITY           │
        └──────────────────────────────────┘
                         │
                         ▼
        ┌──────────────────────────────────┐
  904 ─│ ESTIMATE DIRECT EMISSIONS AND     │
        │ INDIRECT ENERGY EMISSIONS         │
        │ ASSOCIATED WITH REPAIR OF         │
        │ EACH VEHICLE                      │
        └──────────────────────────────────┘
                         │
                         ▼
        ┌──────────────────────────────────┐
  906 ─│ ESTIMATE OTHER INDIRECT EMISSIONS │
        │ ASSOCIATED WITH REPAIR OF         │
        │ EACH VEHICLE                      │
        └──────────────────────────────────┘
                         │
                         ▼
        ┌──────────────────────────────────┐
  908 ─│ DETERMINE TOTAL EMISSIONS         │
        │ ASSOCIATED WITH REPAIR OF         │
        │ EACH VEHICLE                      │
        └──────────────────────────────────┘
                         │
                         ▼
        ┌──────────────────────────────────┐
        │ COMBINE TOTAL EMISSIONS ACROSS    │
  910 ─│ REPAIRS OF MULTIPLE VEHICLES      │
        │ (POSSIBLY AT MULTIPLE VEHICLE     │
        │ REPAIR FACILITIES)                │
        └──────────────────────────────────┘
                         │
                         ▼
        ┌──────────────────────────────────┐
        │ GENERATE AND PRESENT GRAPHICAL    │
  912 ─│ USER INTERFACE OR REPORT          │
        │ CONTAINING EMISSIONS-RELATED      │
        │ INFORMATION                       │
        └──────────────────────────────────┘
                         │
                         ▼
        ┌──────────────────────────────────┐
        │ PERFORM SIMULATIONS TO ESTIMATE   │
  914 ─│ EFFECTS OF CHANGING HOW VEHICLE   │
        │ REPAIRS ARE PERFORMED ON          │
        │ EMISSIONS                         │
        └──────────────────────────────────┘
                         │
                         ▼
        ┌──────────────────────────────────┐
        │ MODIFY/CONTROL HOW VEHICLE        │
  916 ─│ REPAIRS ARE PERFORMED TO REDUCE   │
        │ ESTIMATED EMISSIONS               │
        └──────────────────────────────────┘
                         │
                         ▼
                    ┌─────────┐
                    │   END   │
                    └─────────┘
```

FIG. 9

Europäisches
Patentamt

European
Patent Office

Office européen
des brevets

# EUROPEAN SEARCH REPORT

Application Number

EP 24 16 0592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/391921 A1 (WILNER RICHARD TODD [US] ET AL) 8 December 2022 (2022-12-08) | 1,2,4-7, 9-12 | INV. G06Q10/0631 |
| Y | * paragraph [0196] * | 3,8 | B60S5/00 |
| | * paragraph [0202] - paragraph [0205] * | | G06Q10/0637 |
| | * paragraph [0209] * | | G06Q10/20 |
| | * paragraph [0212] * | | G06Q50/40 |
| | * paragraph [0233] * | | |
| | * paragraph [0276] * | | |
| | * figure 34A * | | |
| | ----- | | |
| Y | JP 2008 299546 A (KYOEI FIRE & MARINE INSURANCE) 11 December 2008 (2008-12-11) | 3,8 | |
| | * paragraph [0002] * | | |
| | * paragraph [0010] - paragraph [0011] * | | |
| | * paragraph [0022] * | | |
| | * paragraph [0066] - paragraph [0068] * | | |
| | * paragraph [0080] * | | |
| | ----- | | |
| A | JP 2023 019250 A (ASUENE INC) 9 February 2023 (2023-02-09) | 1-12 | |
| | * paragraph [0037] * | | |
| | ----- | | |

**TECHNICAL FIELDS SEARCHED (IPC)**

G06Q
B60S

The present search report has been drawn up for all claims

| Place of search | Date of completion of the search | Examiner |
|---|---|---|
| Munich | 11 April 2024 | Shivaldova, Veronika |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 0592

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2024

| Patent document cited in search report | | Publication date | Patent family member(s) | | Publication date |
|---|---|---|---|---|---|
| US 2022391921 | A1 | 08-12-2022 | CN 114902272 | A | 12-08-2022 |
| | | | EP 4049229 | A1 | 31-08-2022 |
| | | | JP 2022553096 | A | 21-12-2022 |
| | | | US 2022391921 | A1 | 08-12-2022 |
| | | | WO 2021081446 | A1 | 29-04-2021 |
| JP 2008299546 | A | 11-12-2008 | NONE | | |
| JP 2023019250 | A | 09-02-2023 | JP 7308492 | B2 | 14-07-2023 |
| | | | JP 2023019250 | A | 09-02-2023 |
| | | | JP 2023112214 | A | 10-08-2023 |

EPO FORM P0459

For more details about this annex : see Official Journal of the European Patent Office, No. 12/82